# EUROPEAN PATENT APPLICATION

(11) **EP 1 717 666 A1**
(43) Date of publication of application: **02.11.2006**
(21) Application number: 06114440.8
(22) Date of filing: 07.03.2003
(51) Int. Cl.: G06F 3/00

(54) **Electric device control apparatus**

(30) Priority: 08.03.2002 US 363024 P
(62) Divisional of application: 03711471.7
(71) Applicant: Revelations in Design, LP, Austin, TX 78716 (US); Josephson, Jonathan, Red Rock, TX 78662 (US); Nalty, Kurt Edward, Austin, TX 78727 (US)
(72) Inventor: Josephson, Jonathan, Red Rock Texas 78662 (US); Nalty, Kurt Edward, Austin Texas 78727 (US)
(74) Representative: McCall, John Douglas

(57) **Abstract**

An electrical switch apparatus (102) including a movement sensitive form is disclosed. The apparatus includes a housing (104), a motion sensor and a processing unit (108), where motion on, near or about the motion sensor is translated into output commands adapted for list scrolling, where the list can be arranged in a hierarchy such as menus or for changing a value of an attribute of a electrical device under the control of the switch.

## Description

### RELATED APPLICATIONS

This claims provisional priority of United Provisional Patent Application Serial No. 60/363,024, filed 8 March 2002.

### BACKGROUND OF THE INVENTION

### 1. Field of the Invention

The present invention relates to azz electrical device control apparatus and methods for making and using same.

More particularly, the present invention relates to an electrical device control apparatus including a multi-device switch, a user interface responsive to movement of a human or animal body part in at least two different directions, such as an x direction and a y direction, and software adapted to convert movements in the at least two directions into selection commands and/or switch commands sufficient to cause a desired selection and/or effect.

### 2. Description of the Related Art

The demand and requirement for electrical switches continues to accelerate. In fact, in residential and commercial environments, the number of electrical switches has grown as fast or faster than the number of new electrical devices introduced in the marketplace. As the number of electrical switches has increased, the need for sure, certain activation and deactivation of the switches has become ever more apparent.

For example in both residential, industrial and commercial environments, overhead lighting is typically controlled by a manual on-off switch on the wall. The switch is in the form of a mechanical lever that simply causes the circuit to open or close. Very little has changed over the years in this ubiquitous standard electrical switch.

Some minor however, are found in the prior art. U.S. Pat. No. 2,421,881 to Heasty discloses the use of a rotatable disk with a number of recesses around its periphery. The disk is on a hub and two electric contact arms provide electric current through conductor rods in alternately spaced recesses. As the disk is rotated, electrical contact is made and then broken.

U.S. Pat. No. 2,863,010 to Riedl discloses a spring loaded push plate that is designed to activate all electrical contacts underneath the plate at once or to selectively engage electric contacts underneath the plate by rocking the plate in the direction of the desired electrical contact.

Additionally, it is known in the art to provide variable control over electrical devices, for example, again, lighting fixtures, by means of so-called dimmer switches. Functioning in a manner well-known in the art, the dimmer switch is activated by the well- known lever or, in some cases, by a knob that is simply twisted.

The longevity of the standard, mechanical, electrical wall light switch is testimony to its functional practicality. Nonetheless, as the demand for, and number of, electrical switches has multiplied with the multiplication of electrical devices found within residential and commercial enviromnents, as indicated above, a need has arisen for an electrical switch with expanded capabilities. Thus, there is a need in the art for an electrical switch capable of manipulating multiple electrical devices without the requirement ofmechanically opening and closing switches. Further, there is a need in the art for providing an electrical switch that is easily modified to accept operational control of additional electrical devices after installation of the switch. Still further, there is a need in the art for providing an electrical switch that is aesthetically and ergonomically pleasing.

### SUMMARY OF THE INVENTION

### Electrical Device Control Systems of this Invention

Accordingly, the present invention provides an electrical device control system including a multi-device switch, an user interface responsive to movement of a human or animal body part in at least two different directions, such as an x direction and a y direction, and software adapted to convert movements in the at least two directions into a switch command, where the switch command is a devices selection command or a device action command.

The present invention also provides an electrical device control system having no mechanical on-off switches, where the apparatus maintains an open circuit to all controlled electrical devices and controls device behavior by controlling a current flow to each device, where an "OFF" condition corresponds to a current flow below a device operating current flow, a threshold current, a substantially zero current, a substantially zero voltage, a voltage below a device threshold voltage or a voltage below a device operating voltage.

The present invention also provides an electrical device control system including a housing having an user interface mounted in a top surface thereof and a multi-device switch in an interior thereof, where the interface and the switch are in electrical communication. The interface includes a sensor adapted to sense movement of a body part of a human or animal and convert the sensed movement into an interface output signal. The switch includes a digital and/or analog processing unit, preferably a digital microprocessor, adapted to convert the interface output signal into either a device selection scroll or a device attribute control output, where the device selection scroll cycles through a list of devices controlled by the switch and the device attribute control output produces a desired adjustment to an attribute of a selected device, such as amplitude, phase, frequency, temperature, modulation, flow, humidity, etc. Thus, the apparatus can be used to control all attributes of each device attached to the switch. For example, the apparatus could control an intensity of light produced by one or a multitude of lights, control the temperature of a room, control the temperature and cooking time of an oven, control an autoclave sterilization cycle, control a drug administration cycle, control a process control cycle, control audio equipment, control visual equipment, control audio-visual equipment, or the like. It should be recognized that an attribute of a device is any adjustable control associated with the device regardless of the exact nature of the attribute.

The present invention also provides a control system for remotely controlling devices in a room or area removed from the system or isolated from the system.

The present invention also provides a system of multiple electrical devices including, an electrical switch apparatus for manipulating the multiple electrical devices, which includes a rotatable sphere or ball and a housing conformed to receive and retain the sphere or ball so that the ball can move relative to the housing. The electrical switch apparatus also includes an optical sensor adapted to sense physical movement of the sphere and to convert the sensed physical movement into first input control signals. The electrical switch apparatus also includes a housing sensor adapted to sense receive physical movement of the housing and to convert the sensed physical movement into to second input control signals. The electrical switch apparatus also includes a microprocessor connected to the optical sensor and to the housing sensor and to the multiple devices and adapted to convert the first and second input signals to devices output control signals for manipulating attributes of the multiple electrical devices. The first input control signals resulting from movement of the sphere in a direction creates output control signals for the selection of one of the multiple electrical devices. Once a device is selected, the first input control signals resulting from movement of the rolling sphere in a different direction creates output control signals for variable control of the devices. Alternatively, the second input control signals resulting from movement ofthe housing selects one of the multiple electrical devices for manipulation, and the first input control signals variably control an attribute of the selected device.

The present invention also provides a system where movement of the rolling sphere or ball in a first direction creates output control signals for the selection of one of the multiple electrical devices for manipulation and movement of the rolling sphere in a second direction creates output control signals for variably controlling an attribute of the selected device.

The present invention also provides a system where movement of the housing creates output control signals for the selection of one of the devices, while movement of the rolling sphere creates output control signals for variably controlling an attribute of the selected device.

The present invention also provides a system including a motion sensor where movement of within the sensing zone of the sensor in a first direction creates output control signals for the selection of one of the multiple electrical devices for manipulation and movement of within the sensing zone of the sensor in a second direction creates output control signals for variably controlling an attribute of the selected device. Moreover, the system can allow attribute selection by continued motion in the second direction followed by motion in a third direction to variably control the selected device attribute. Furthermore, the system can include a preset or programmable sequence of motions within the motion sensor sensing zone, where the sequence cause a preset or pre-programmed response of the selected device. Additionally, the system can utilize the preset or programmable sequences to control all of the devices or any subset of the devices, different patterns or sequences can result in a preset or pre-programmed global or partial global preset - mood lighting, music settings and selections, *etc.*

### Method for Using the Control System of this Invention

The present invention provides a method for manipulating one electrical device or a plurality of electrical devices using a system of this invention, including the steps of sensing motion within a sensing zone of a motion sensor in a first direction, converting the sensed motion into an output control signal adapted to scroll through the devices or preset collections of devices, sensing motion within the zone of the sensor in a second and different direction in selection of a device or a preset collection of devices, and converting the sensed motion into control signals adapted to variably control all attribute of the selected device depending on a direction of motion in the second direction. If the selected device has more than one attribute, then the method can allow include the step of converting the sensed motion in the second direction into an output signal adapted to scroll through the attributes and sensing motion in a third direction different from the second direction and converting the sensed motion into control signals adapted to variably control an attribute of the selected device depending on a direction of motion in the third direction. Moreover, the method can include converting a patterned motion into an output signal adapted to select a preset or programmed response of the selected device or collection of devices.

The present invention also provides a method of manipulating at least one electrical device using a system of this invention, including the steps of providing a rotatable sphere or ball in a conforming housing and sensing rotation of the ball in a first direction with a motion sensor such as an optical sensor and converting the sensed motion into first input control signals. The method also includes the steps of processing the input control signals in a microprocessor into device selection outputs. The method also includes the steps of sensing rotation in a second, different direction and converting the sensed motion in the second direction into second input control signals and processing the second input control signals into attribute control signals depending on a direction of the second motion and forwarding the attribute control signals to the device resulting in a change in the attribute. Again, the method also include steps for selecting an attribute from an attribute list due to motion in the second direction and sensing motion in a third direction, different from motion in the second direction, for attribute control.

The method can also include the steps of providing electrical switch apparatuses, each controlling multiple electrical devices and step for selecting each switch and devices with switch, the devices can include lighting devices, motion devices, security control devices, sound devices, gas control devices, water control devices, air handling (heating and cooling) control devices, control devices or the like.

### User Interfaces of this Invention

The present invention also provides an user interface responsiv to movement within a zone as movement of a human, or animal, a human or animal body part or an object the control of an human or animal, where the interface is capable of sensing motion in more than one direction, preferably in a plurality of different directions and where the interface converts the sensed motion into output signals capable of being used as control signals.

The present invention also provides an user interface responsive to movement of a human or animal, a human or animal body part or an object under the control of an human or animal in at least two directions, where the directions are different, motion in a first direction scrolls through a selection list and motion in a second and different direction from a given scroll position corresponding to a desired selection results in generation of a command to change a value of an attribute associated with the selection.

The present invention also provides an user interface responsive to movement of a human or animal, a human or animal bodypart or an object under the control of an human or animal in at least two directions, where the directions are different, motion in a first direction scrolls through a device list or an available (on-line) device list and motion in a second direction from a desired scroll position corresponding to a desired device results in generation of a command to change in an attribute associated with the selected device.

The present invention also provides an user interface responsive to movement of a human or animal, a human or animal body part or an object under the control of an human or in at least two directions, where motion in a first direction scrolls through a list of available (on-line) devices, a dynamic list, or a static device list and motion in a second direction from a scroll position corresponding to a desired selection scrolls through an attribute list associated with the selection and motion in a third direction from an attribute scroll position corresponding to a desired attribute of the selection changes a value of that attribute, and where the first and second directions are different and the second and third directions are different, while the first and third directions can be the same or different. This process of changing directions to cause a selection and eventually causing a change in an attribute of a selected device can be continued *ad infinitum.* A list is considered to be static if it simply lists all devices that are attached to a switch, whether they are in an active or inactive state; while a dynamic list is a list that permits only selection from those devices that are active. The term inactive means that the device can no longer be controlled by the interface, while the term active means that the device can be controlled by the interface. Moreover, the interface can be designed to sense motion in one direction and continue processing the result caused by the motion until motion in a different direction is sensed. Thus, the interface would sense an initial motion and would assume that that motion is continued until it senses motion in a different direction without requiring the actual continuation of motion in a given direction for obvious reasons. Furthermore, the interface can be designed to sense motion and function in that state while the moving object is subsequently at rest (move then hold) and the interface would act as if motion in the given direction is continuing. For example, if the motion is associated with a selection list, then an initial movement would invoke a continuous scroll through the list which would be interrupted only by motion in a different direction which would select the list member and either activate a secondary list or activate an attribute control, where a change to the attribute control would depend on the direction of the motion, *e.g.*, up would increase the attribute value, down would decrease the attribute value.

The present invention also provides an user interface responsive to movement of a human or animal, a human or animal body part or an object under the control of an human or animal in at least two directions, where motion in a first direction scrolls through a static or dynamic device selection list and motion in a second direction from a scroll position corresponding to a desired device scrolls through an attribute list associated with the selected device and motion in a third direction from an attribute scroll position corresponding to a desired attribute of the selected device changes a value of that attribute, and where the first and second directions are different and the second and third directions are different, while the first and third directions can be the same or different. This process of changing directions to cause a selection and eventually causing a change in an attribute value of a selected device can be continued *ad infinitum.*

The present invention also provides an user interface responsive to movement of a human or animal, a human or animal body part or an object under the control of an human or animal in at least two directions, where motion in a first direction scrolls a first dynamic or static selection list, motion in a second direction from a first scroll position corresponding to a desired first selection scrolls through a second dynamic or static selection list associated with the first selection, motion in a third direction from a second scroll position corresponding to a desired second selection scrolls through attributes associated with the second selection, and motion is a fourth direction from a third scroll position corresponding to a desired attribute changes a value of that attribute, and where the first and second directions are different, the second and third directions are different, the third and fourth directions are different, while the first and third directions can be the same or different and the second and fourth directions can also be the same or different. This process of changing directions to cause a selection and eventually causing a change in an attribute of a selected device can be continued *ad infinitum.*

The present invention also provides an user interface responsive to movement of a human or animal, a human or animal body part or an object under the control of an human or animal in at least two directions, where motion in a first direction scrolls through a list of available (on-line) multi-device switches (MDSs), a dynamic list, or a list of MDSs, a static list, motion in a second direction from an MDS scroll position corresponding to a desired MDS scrolls through a static or dynamic list of devices controlled by the selected MDS, motion in a third direction from a device scroll position corresponding to a desired device scrolls through available attributes associated with the selected device, and motion is a fourth direction from a third scroll position corresponding to a desired attribute ofthe selected device changes a value of that attribute, and where the first and second directions are different, the second and third directions are different, and the third and fourth directions are different, while the first and third directions can be the same and the second and fourth attributes can also be the same. This process of changing directions to cause a selection and eventually causing a change in an attribute of a selected device can be continued *ad infinitum.*

The present invention also provides an user interface including a position selection unit and a motion sensing unit, where the selection unit includes a plurality of selection buttons, a plurality of active selection positions, a selection slide ring, a touch sensitive selection menu, or any other selection device, where the motion sensing unit is responsive to movement of a human or animal, a or animal body part or an object under the control of a or animal in at least two directions, where the directions are different, motion in a first direction corresponds to one type of action and motion in the second direction corresponds to a second type of action. The action types can be a selection action via menu or icon scrolling, an attribute selection action via menu or icon scrolling or a change in a attribute value where the direction of motion controls the direction of change of the value of the attribute.

The present invention also provides an user interface including a position selection unit and a motion sensing unit, where the selection unit includes a plurality of selection buttons, a plurality of active selection positions, a selection slide ring, a selection slide, a touch sensitive selection menu, or any other selection device, where the motion sensing unit is responsive to movement of a human or animal, a human or animal body part or an object under the control of a human or animal in at least three directions, where the successor directions are different, motion in each of the directions corresponds to a selection action via menu or icon scrolling, an attribute selection action via menu or icon scrolling or a change in a attribute value via motion in to opposing directions such as up or down or right or left.

The present invention also provides a movement sensitive form in one direction that creates output control signals for the selection of at least one of a plurality of independent electrical devices.

The present invention also provides a movement sensitive form in one direction that creates output control signals for variable control of the at least one attribute of at least one independent electrical device.

The present invention also provides a movement sensitive form including a movable housing in control disposition to a plurality of independent electrical devices via a digital and/or analog processing unit such as a microprocessor or microcontroller such that movement ofthe housing selects at least one of the plurality of independent electrical devices for manipulation, while movement in a different direction changes a value of an attribute associated the selected independent device(s). In one preferred embodiment, the movement sensitive form is moveable and in another aspect of invention, the form includes a movable object such as a rotatable sphere retained in the housing. In another embodiment, the present invention also provides a movement sensitive form that is internally lighted. In another embodiment, the housing is conformed to enable in out movement of the movement sensitive form. In another embodiment, output signals for variable control continue as long as movement of the form or the movable object associated with the forri continues. In another embodiment, output signals for variable control continue until movement in a different direction is sensed by the movement sensitive form. In another embodiment, the movement sensitive form contains fluid with suspended material.

### Methods for the User Interfaces of this Invention

The present invention also provides a method for controlling devices comprising the step of moving a body, a body part or an object associated with a body or body part in an active zone of an user interface of this invention, selecting at least one of a plurality of electrical devices, and changing a value of at least one attribute of the selected devices, where the interface can include only a motion sensing unit or a position selection unit and a motion sensing unit, where the selection unit includes a plurality of selection buttons, a plurality of active selection positions, a selection slide, a selection slide ring, a touch sensitive selection menu, or any other selection device, where the motion sensitive unit is responsive to movement of a human or animal, a human or animal body part, or an object associated with a human or animal in at least two directions, where successor directions are different.

### DESCRIPTION OF THE DRAWINGS

The invention can be better understood with reference to the following detailed description together with the appended illustrative drawings in which like elements are numbered the same:

Figure 1A depicts a preferred embodiment of an electrical device control system of this invention including a single multi-device switch;

Figure 1B depicts a preferred embodiment of an electrical device control system of this invention including a central control unit and a plurality of multi-device of Figure 1A;

Figure 1C depicts another embodiment of an electrical device control system of Figure 1B;

Figure 2A depicts a preferred embodiment of an device control of this invention including a multi-device switch and a handheld control unit;

Figure 2B depicts a preferred embodiment of an electrical device control system of this invention including a central control unit and a plurality of multi-device of Figure 2A;

Figures 3A-C depict three views, top and two side views, of a preferred user interface of this invention;

Figures 3D-F depict three views, top and two side views, of another preferred user interface of this invention;

Figures 3G-I depict three views, top and two side views, of another preferred user interface of this invention;

Figures 4A-C depict plan views of three preferred embodiments of an user interface of the present invention including a motion sensor and active ring;

Figures 5A-C depict plan views of three preferred embodiments of an user interface of the present invention including a motion sensor and movable ring;

Figure 6A-C depict plan views of three preferred embodiments of an user interface of the present invention including a motion sensor and a plurality of concentric active ring areas or movable rings;

Figure 7 depicts a top view of another preferred embodiment of an user interface of the present invention including multi-directional motion sensing and concentric active areas;

Figures 8A-D depict scrolling through a selection list with motion in one direction relative to an user interface of this invention;

Figures 8C and E-G depict selecting from the list and simultaneously changing a value of an attribute by changing the direction of the sensed motion;

Figure 9A depicts a schematic view of a preferred embodiment of the invention illustrated in Figure 1;

Figure 9B depicts a schematic view of a p referred embodiment of the invention illustrated in Figure 1;

Figures 10A-B depict a top and side view of another preferred embodiment an user interface or switch with user interface of Figure 9;

Figures 11A-B depicts a top and side view of an other preferred embodiment an user interface or switch with user interface of Figure 9;

Figures 12A-B depicts a top and side view of another preferred an user interface or switch with user interface of Figure 9;

Figures 13A-B depicts a top and side view of another preferred embodiment an user interface or switch with user interface of Figure 9;

Figure 14A depicts a circuit diagram of a preferred electrical switch apparatus of the present invention;

Figure 14B depicts a circuit diagram of another preferred electrical switch apparatus of the present invention;

Figure 14C depicts a circuit diagram of another preferred electrical switch apparatus of the present invention;

Figure 15A depicts a conceptual flowchart of a preferred program flow for sensing motion in a switch of this invention and acting on the sensed motion; and

Figure 15B depicts a conceptual flowchart of another preferred program flow for sensing motion in a switch of this invention and acting on the sensed motion.

### DETAILED DESCRIPTION OF THE INVENTION

The inventors have found that a new multi-device electrical switch can be constructed which allows many electrical devices and/or appliances to be managed by a single multi-device switch or by a plurality of such switches either under central or distributed control. The inventors have also found that the switches can be controlled by a novel movement sensitive human or animal interface which is capable to discerning motion of a human or animal, a human or animal body part, or an object under the control of an animal or human in at least two direction, where motion in one direction allows selection of any one device or some or all devices controlled by the switch(es), device selection, and motion in the other direction controls a value of at least one attribute associated with the selected device(s), attribute control. The inventor have found that the motion can be due to direct interface contact or, and more preferred, by simple motion in a motion sensitive area and/or volume and/or zone associated with an outer surface of the interface.

The present invention broadly relates to an electrical device control system including an user interface and one or a plurality of multi-device switches (MDSs), each MDS controlling one or a plurality of electrical devices, where the interface senses motion in at least two directions and converts the sensed motion into output signals that cause a processing unit to either scroll through a selection list or to select and change an attribute value of at least one controlled device, where each direction is different from its predecessor and its successor and where motion in a final direction causes the processing unit to change an attribute value of at least one controlled device. In addition to a user interface and an MDS, the systems of this invention can also include security devices such as print, hand print, retinal, voice, other electronic security systems, key locks, any other type of mechanical locking or mixtures or combinations thereof. Such security devices can include separate sensors or can use the same sensor used by the interface. Thus, an active pad sensor could be used not only to sense motion, but also to form an image of a finger print or hand print, while an optical sensor could also support a retinal scan function.

The present invention also broadly relates to an electrical switch apparatus or device control system including an user interface and a multi-device switch (MDS) controlling a plurality of electrical devices, where the interface converts movements of a human or animal body part in one direction to device list scroll commands and movements in a different direction into device attribute change commands.

The present invention also broadly relates to an user interface adapted to convert motion of a human or animal, a human or animal body part or an object under the control of an animal or human in at least two directions into either list scroll commands or selection/attribute change commands.

The present invention also broadly relates to an user interface adapted to convert motion of a human or animal, a human or animal body part or an object under the control of an animal or human in a plurality of directions to list scroll commands, one list associated with change in direction, where each direction is different from its predecessor and successor directions and where motion in a final direction is converted into attribute change commands, where the final direction is different from its predecessor direction.

The present invention also broadly relates to methods for controlling devices with an MDS or a system including at least on MDS of this invention, to methods for installing MDSs of this invention, to methods for controlling a plurality of MDSs and devices associated therewith with an user interface of this inventions.

The MDS of this invention are designed to supply a given wattage to each device it controls. Because the MDSs of this invention can handle and distribute a fairly large amount of power, the MDSs of this invention can control large numbers of devices such as of lights.

The present invention relates to a light control system including a plurality of lights in electrical communication with at least one MDS of this invention, where each light can be controlled separately, groupings of lights can be controlled collectively or all of the lights, as a single group, can be controlled collectively depending on a wiring configuration of the lights.

The present invention relates to a home control system including a central control unit and a plurality of MDSs of this invention, where each MDS controls a plurality of electrical devices within the house and the central control unit in turn controls each of the MDSs.

The present invention relates to a home control system including a central control unit and a plurality of MDSs of this invention, where each MDS controls a plurality of related electrical devices within the house and the central control unit controls each of the MDSs, where the related devices are devices the user associates with each MDS. For example, one MDS may control the lights in a room, while another MDS controls audio-visual devices in the room and one MDS controls environmental control equipment such as air conditioners, air humidifiers/dehmnidifiers, heaters, air purifiers, water purifiers, water conditions or the like.

The user interface of this invention allows the user to select an electrical device and change a value of an attribute associated with the device without invoking any hard selection protocol, such as a mouse click or double click, touch or double touch of a pad, or any other hard selection process. The user interface simply tracks motion in proximity to the interface, and when the motion changes direction by an amount sufficient to trigger a software threshold direction change value, the software either issues a scroll command or a selection/attribute value change command. Although the movements are preferably in directions which are easy to discern such as motion in the x and y direction, an ordinary artisan should recognize that the directions need not be orthogonal and need not be in an essentially x or y direction, but can be in any two arbitrary directions capable of being discriminated there between and can actually be set on the fly. Thus, when an user moves, moves a body part or move an object under user control in proximity of the interface, the direction of motion is sensed causing either a scroll command or a selection/attribute value change command to be issued by the software. For systems that have more than two levels of drill down lists and/or multiple controllable attributes, more than two change in motion direction are required for selection and attribute value control.

In its simplest form, the switch is either an ON/OFF type switch or a variable control switch such as a dimmer-type switch for lights. The user interface or switch controller can be any motion sensitive or motion sensing interface, including a main component and a motion sensor situation in a control area. The main component can be a touch sensitive screen, an active surface, a rotatable ball, or any other device that permits the sensor to discern motion in at least two directions, or mixtures or combinations thereof. The controller can be mechanical, inductive, capacitive, optical, magnetic, pressure-sensitive, electrostatic, any other type of device capable of changing state or capable of discerning motion in at least two direction, or mixtures or combinations thereof. As motion is detected, the motion is tr anslated into useful controls. For example, movement of a body part or an object under control of a human or animal in an up/down motion may result in toggling a device on or off or changing an attribute of the device in a continuous or discrete manner. The active area or active device of the interface may be of any shape such as round, square, oval, star, or the like. The interface may also include selection rings, selection banners, buttons, or a plurality of active areas, buttons, slides, rings, or other devices or mixtures or combinations thereof.

In one preferred embodiment, the active device of an interface is a ball and the sensor is capable of detecting motion of the ball in at least two directions. In another embodiment, the active device is a simple window, where movement is detected either by moving a body part or an object under control of a human or animal within an active sensing zone, volume or area (*e.g*., an optical sensor) or by touching (moving a cross) an active surface. For touchless devices such as optical sensors, movement can be detected at a distance above a surface depending on a focal plane of the optical device. For example, for interfaces that respond to movement close to the surface, the distance can range from the surface to about 1 ta 2 inches above the surface.

In the following examples of interfaces of this invention and their use, the interface coiilprises a rotatable ball in a housing having a sensor that can detect znotian of the ball in the housing. A preferred interface is simalar to the new roller ball mouse devices for computers. However, in these the ball may be substituted by any other type of including a motion now existing or yet The interfaces preferably can sense in at two direction such as up/doiwi and side-to-side (x movement), Some interfaces can also detect in/out motion or nearer/farther motion (z movement). These movements can cause menu scrolling, device scrolling, attribute scrolling, switch selecting, device selecting, attribute selecting, and/or attribute adjusting (*i.e.*, changing a value of an attribute with a selected device). These interfaces all operate by using to select devices adjust attribute values with the selected devices.

In one preferred example, the interface comprises a rotatable polygonal structure with associated motion sensor having a rotatable b all mounted in a center thereof having an associated motion sensor. Rotation of the polygon controls one type of action, while rotation of the ball controls other types of actions. If the polygon is a triangle, this type of interface is ideally suited for controlling lights having 3-way settings, while the ball can be used to select lights and/or act as a dimmer type switch. Alternatively, the ball controls device selection and attribute adjustment, while the polygon controls switch location.

In another preferred example, the interface includes a housing having a ring and a movable ball. Movement of the ball up/down can act as an ON/OFF type switch or a dimmer type switch. For movable rings, moving the ring around could control the color combination of a color active device, *i.e*., control the red, green and blue values of colored devices such as LEDs, bulbs, colored bulbs, shades, *etc.* For touch sensitive rings, the position of activation can set the lights to a specific color, shade and/or hue, or can result in continuous changes of color, shade and/or hue due to motion around the ring.

In another preferred example, the interface includes a ball, where ball movement up/down controls brightness of lights or volume of a device, while motion from side to side controls device (*e.g.,* light) selection. The interface can also include touch points to choose different devices or types of devices such as lights, mechanical devices (*e.g.,* a/c, heating, water, *etc*.), security devices, audio, visual, audiovisual devices, or the like.

In another preferred embodiment of an interface of this invention, the interface a split ball, moving one half controls one attribute of a device, while moving the other half controls another of the device, such as one half controlling the cold and the other half the hot water. Alternatively, on half can control lights in a room, while the other half control sound, room temperature, *etc*. In another split ball embodiment, each half is a dininer jpe for two separate circuits.

In another preferred embodiment of an interface of this invention, the interface includes a flat surface (touch or touchless) having a single active area and associated sensor or a plurality of different active areas and associated sensors, where the single area can be used to control devices or the control can be distributed over the different areas. Thus, the can be used to control different attributes of a given device or to control different sets of devices that are either pre-defined or user assigned.

In another preferred embodiment of an interface of this invention, the interface includes a ball mounted in a housing supporting in or out motion ofthe ball (*i.e.*, motion along a z-axis). The z-axis motion could be used to turn devices on or off, turn all devices associated with a given MDS on or off, activate default setting or other pre-defined device settings or presets. Thus, pushing in on the ball or touching a touch sensitive surface at a specific place would allow the user to activate pre-defined device setting, such as setting all the lights in a room or house to a day, evening, night, party, *etc.* setting; setting the sound in a room or rooms to a given mode of surround sound; activate security alarm system throughout a house or building; *etc.*

In another preferred embodiment of an interface of this invention, the interface includes a plurality of movable components and associated sensors such as balls, touch pads, active surfaces, or the like or mixtures thereof, each component and associated sensor assigned to a different switch, assigned to different devices on a given switch, assigned to different groups of switches, assigned to different groups of devices or mixture thereof, where movement allows the user to select and/or control a value of an attribute of a device, a collection of devices, a collection of switches, or a collections of switch and devices.

In another preferred embodiment of an interface of this invention, the interface includes a movable component such as a ball, where the interface also includes a component that lights up when the interface is activated, allowing it to be used as a night light or even a light itself. In another embodiment, an user interface of this invention includes a clear ball such as all acrylic ball or glass ball and associated motion sensor set in a base of a lamp, which provides illumination through the ball. As the ball is rolled, a light inside the base shines up through the ball, illuminating the ball. When the ball is used to control an attribute, the ball brightens or dims depending on the change to the value of the attribute (brighter light - higher value, lower light - lower value). When used to select devices or switches, the ball can change color. This same lighting and color coding arrangement can be used in conjunction with any other interface of this invention. It should be recognized that motion in one, two or more directions causes the corresponding changes in interface brightness and/or color, shade or hue. For interfaces including separate selection devices such as rings, buttons, banners, or the like, interface coloring can change in response to the selection process.

As an example, a tulip light fixture (a base with branches radiating out therefrom or a central shaft with a set of branches radiating therefrom), motion in one direction, such as side to side motion, in an area, zone or volume detectable by an interface of this invention causes selection of each light separately, while motion in a second direction such as up and down motion in the area, zone or volume detectable by an interface of this invention controls intensity of light being emitted by the selected branch, the branch from which the motion changed from side to side to up/down. Of course, the selection of each branch and the light associated therewith can be accomplished using a ring or other type of device selector as described herein.

In another preferred embodiment of an interface of this invention, the interface of this invention includes a first motion sensitive detector comprising a rotatable polygon and its associated motion sensor and a second motion sensitive detector capable of detecting motion in at least two direction. The number of vertices associated with the polygon corresponds to the maximum number of MDS and/or devices controllable by the interface. By rotating the polygon so that a given vertex aligns with a selector or by merely scrolling through a list based on polygon rotation, the user selects a desired MDS or device. The second detector allows the user to select other control levels such as selection of devices controlled by a selected MDS or attribute selection and/or control. Alternatively, the polygon is not a physical device, but a computer generated construct on a touch or touchless sensitive display. Touching or activating a given location results in the selection of a desired MDS or device, while motion in the active area or volume of the second detector results in other selections and/or attribute value control. Alternatively, the includes a single motion detector associated with the touch or touchless display displaying the polygon representing the number of devices controllable by the interface. For lights, an user can control the amount of light emitted by each light by moving either from the center to the vertex associated with a desired light to increase the lights output or from the device toward the center to decrease the lights output maximum at the of the polygon; minimum at the center. If the user adjusts a desired light to a given output and then desires to set the other lights at that or a corresponding the user moves his/her in a circular motion about the center point, staying at a given distance the center point or in a given brightness zone. Then as the user's finger passed over rays or sectors the other lights, each light would immediately adjust to the brightness level corresponding to the brightness zone. This type of interface can also be used to control volume in areas of a home associated with a stereo system, where the volumes in a certain zone in a room can be raised or lowered, where different radial pie slices would correspond to different regions. In a ideal environment, any specific spot or area of a room can be controlled, where the room is represented by an infinite number of rays radiating from a center point to a perimeter of the room and motion sensed by the controller in any outward direction causes a corresponding volume gain in the corresponding area. So if you chose to move in one direction from the center outward, that corresponding the volume experienced in that area of the room would increase. If you stopped mid-way between the center and the perimeter, the volume would be a half. If you moved concentrically (at the same radial distance from the center point) around the center, then the volume in the room would increase to half volume. If the user continued around until the user was back at the start point, then the volume of in each area of the room would be equal, or as equal as possible with the speaker arrangement in the room. Of course, motion from the perimeter inward would lower the volume.

In another preferred embodiment of an interface of this invention, the interface includes a plurality of concentric rings controlling different categories of devices or systems, where the categories can be pre-set or user defined. The rings can be physical or software constructed. Thus, one ring may represent a set of recessed lights or light fixtures around a perimeter of a conference room. By touching one, some or all of light indicators on the ring, their corresponding lights are made active and controllable by the central motion detector such as a ball. As the ball is moved up or dowra (y motion), the active lights brighten or dim. After these lights have been set, the user can deactivate those lights and activate other lights repeating the output adjustment. By motion side to side or right to left (x motion), the user can select from the activated lights. Then the user can roll up or down, selecting and adjusting the output of the selected light. By seeing an indicator on the switch, it may in this way be easier to know which light is being activated. It may be useful for the fixture itself to briefly pulse so the operator would more easily identity which light is being controlled. The ring out might control the amount of air coming out from vents, and the other ring may control speaker volume of wall-mounted speakers, *etc.*

In each of the interface ofthis invention, motion associated with changing a value of an attribute (light output, volume, temperature, air flow, *etc*.), the rate of change can correspond the rate of motion within the active area, zone or volume of the motion detector, but preferably change occurs at a pre-deterrnined rate, which can be preset and non-adjustable or preset and user adjusted.

The interface of this invention can be clear and includes a camera or other video devices, such video devices are ideally suited for baby monitors or other situation where surveillance by a camera in warranted. Moreover, the interfaces and MDSs of this invention can include a port for updating programming or software functionality, where the port can support either wire or wireless interactions.

If the interface of this invention includes a ball, pushing down on the ball can activate a z axis function. In optical interfaces, holding a body part or object under the control of an animal or human in place within the active area, zone or volume for a given period oftime can cause the interface to automatically scroll through a device and/or MDS list - activating a z function. Moving the body part close to and then away form the sensor may act to select different devices. The same holds true in variations of each type of sensor use, *e.g.,* in touch-sensitive sensors, tapping on pad or area would change functions at each tap activating the z-function, and once function is chosen, then up/down or y movement may active channel selection function for a TV or radio and x movement (side to side) may control volume. Moreover, the interfaces can be programmed to sense an initial direction of motion and continue processing the corresponding action until motion in a different direction is sensed invoking a selection function and a secondary control function such as a subsequent list scroll function or an attribute value control function. Furthermore, the interfaces can be programmed to recognize a motion pattern or a set of motion patterns, where the pattern can represent an access code for security purposes or a pre-programmed response. For example, a certain series of movements results in setting all the light in a house to a pre-programmed setting, turning on the TV to a pre-programmed channel, adjusting the house temperature to a pre-progranuned setting or the like.

In all examples, functions in three different direction such as x, y and z are not limited to volume, brightness, *etc*., all functions may be mixed, changed and duplicated by movement in any direction, provided a given direction be discerned from its immediate direction. In other words, to use an as a type switch, y movement can result in an on/off function, x movement can result in bright/dim function and z movement can result in color or in the number of bulbs activated. Alternatively, motion any direction can result in the brighten/dim function, while other devices such as a ring controllers the on/off function or collective control functions.

All these same functions may be controlled by a joy-stick - x, y and z movement of the joy-stick would correspond to movement of a ball or a body part. Alternatively, simple arrows or buttons can be used.

For radio tuning, a strip could be used to allow tuning by sliding your finger across the surface of the strip. When a desired station is found, either a tap or an up/down movement would select the station. Once selected, movement along the strip would raise or lower the volume. Another tap or up/down movement could switch to tone control (treble/bass), an equalizer control, fade/balance control or the like.

The MDSs and interfaces of this invention can be constructed with modules that can be hot-swappable, where the face plat or sensor is a module capable of being replaced with an upgrade by popping the old out and popping the new in.

In another preferred embodiment of an interface of this invention, the interface include a screen for internet browsing, TV watching, visual monitoring (babies, *etc*.) or any other visual activity. By touching or with a designated movement (*e.g.*, in the case of touchless controllers) a virtual image of a ball or x, y or z axes are displayed so that the same ideas of motion in proximity of a sensor may be incorporated in a virtual model. The interface can also incorporate holographic displays, where projection from a remote unit would activate with movement within the holographic projection. Movement within the holographic projection could result in scrolling through a list of controllable devices, while change an nxovement in the holographic projection when a desired device come, view could result in the scrolling of attributes with the or changing of a value of an attribute of a single attribute device. Of course, one of ordinary skill in this art should recognize that this list selection - attribute control scheme can involve drilling up and down through a large number of lists depending on the number ofMDSs and the number of attributes associate with each device or MDS.

The interfaces of this invention can also include security detectors and security software to limit access to control processing. The interface could include iris or retinal scanners, finger print scanners, facial type scanners or the like to control access to the control units of this invention.

The optical sensors can also be used as optical touch or touchless pads for notebook computer or drawing tablets. The optical sensors can also be digital or analog camera systems with focal plane set to sense motion within a zone, area or volume in front of the lens. The optical sensors can be operate in any region of the electromagnetic spectrum including, without limitation, RF, microwave, near IR, IR, far IR, visible, UV or mixtures or combinations thereof. Moreover, LCD screen may be incorporated to identify which devices are chosen or the temperature setting, *etc.* Moreover, the interface can project a virtual control surface and sense motion within the projected image and invoke actions based on the sensed motion. The motion sensor associated with the interfaces of this invention can also be acoustic motion sensor using any acceptable region of the sound spectrum. Of course, the interfaces can include mixtures or combinations of any known or yet to be invented motion sensors.

A timed hold in front of a sensor can be used to activate different functions, *e.g.,* for a sensor on a wall, holding a finger or object briefly in front of sensor causes lights to be adjusted to a preset level. While, continuing to hold, begins a bright/dim cycle that ends when the hand is removed. Alternatively, the timed hold causes an attribute value to change, *e.g.,* if the attribute is at its maximum value, a timed hold would cause the attribute value to decrease at a predetermined rate, until the body part or obj ect is removed from the active zone. If the attribute value is at its minimum value, then a timed hold would cause the attribute value to increase at a predetermined rate, until the body part or object is removed from the active zone. If the value is somewhere in the middle, then the software could allow random selection or would select the direction that would allow maximum control. Of course the interface could allow for the direction to be determined by the initial direction of motion, while the timed hold would continue to change the attribute value until the body part or object is removed from the active zone.

Another interface of this invention includes an external shell (clear or not) having an active fluid contained therein, where movement across the surface induces a detectable movement of active fluid.

All that is required in order for the interface to function properly is that the software must be able to determine when to transition from one command format, such as scrolling through a list to selecting a member from the list, has occurred due to a change in a direction of motion sensed by the interface. Thus, the difference in the direction must be sufficient to allow the software to make such a determination (to detect a discernable change in motion direction), without frustrating the user because the direction change routine does not permit sufficient angular deviation from a given direction before changing from one command format to another, i.e., changing from a list scroll function to an attribute value adjustment function associated with a member of the list. Although the angle deviation can be any value, the value is preferably about ±5° from the initial direction, preferably, about ±10° from the initial direction and particularly, about ±15° from the initial direction. For systems set to run on orthogonal directions, e.g., x and y or x, y and z, the deviation can be as great as about ±45°, but is preferably about ±35° and particularly about ±25°. Alternatively, movement in a given direction within an angle deviation of ±x° will result in the control of a single device, while movement in a direction half way between two devices within an angle deviation of ±x° will result in the control of both devices, where the magnitude of value change can be the same or less than that for a single device and where the value of x will depend on the number of device directions active, but will preferably be less than or equal to ¼ of the angle separating adjacent devices. For example, if four devices are located at +x, -x, +y and -y, from a center of the interface, movement in a 45° angle relative to +x and +y would adjust the attribute of both the +x and +y device simultaneously, at a single device rate or at half a single device rate or at any other predetermined rate of attribute value change.

Suitable electrical devices and/or appliance capable ofbeing controlled by the control systems and/or switches of this invention, include, without limitation, any electrical device or appliance having attributes which can be controlled by a switch, Exemplary examples of such attributes include, without limitation, ON, OFF, intensity and/or amplitude, impedance, capacitance, inductance, or any other controllable electrical and/or electro-mechanical function and/or attribute of the device. Exemplary examples of electrical devices and/or appliances include, without limitation, lighting devices such as indoor and/or outdoor lights or light fixtures, cameras, ovens (conventional, convection, microwave, and/or *etc.*), dishwashers, stoves, sound systems, display systems (TVs, VCRs, DVDs, cable boxes, satellite boxes, and/or *etc.*), alarm systems, control systems, medical devices, robots, robotic control systems, hot and cold water supply devices, air conditioning system, heating systems, ventilation systems, air handling systems, computers and computer systems, chemical plant control systems, computer operating systems and other software systems, remote control systems, or the like or mixtures or combinations thereof.

Suitable systems that are amenable to control by the interface ofthis invention include, without limitation, any analog or digital processing unit having a plurality of software products installed thereon and where each software product has one or more adjustable attributes associated therewith. Exemplary examples of such software products include, without limitation, operating systems, graphics systems, business software systems, word processor systems, internet browsers, accounting systems, military systems, control systems, or the like, or mixtures or combinations thereof.

Suitable digital processing units (DPUs) include, without limitation, any digital processing unit capable of accepting input from a plurality of devices and converting at least some of the input into output designed to control attributes of one or more of the devices. Exemplary examples of such DPUs include, without limitation, microprocessor, microcontrollers, o r the like manufactured b y Intel, Motorola, Erricsson, H P, Samsung, Hitachi, NRC, Applied Materials, AMD, Cyrix, Sun Microsystem, Philips, National Semiconductor, or any other manufacture of microprocessors or microcontrollers.

Suitable analog processing units (APUs) include, without limitation, any analog processing unit capable of accepting input from a plurality of devices and converting at least some of the input into output designed to control attributes of one or more of the devices. Such analog devices are available from manufacturers such as Analog Devices Inc.

### Illustrative Examples of General Control Systems of this Invention

Suitable movement sensing apparatus include, without limitation, digital cameras, optical scanners, optical roller ball devices, touch pads, inductive pads, capacitve pads, holographic devices, laser tracking devices, thermal devices, any other device capable of sensing motion or the like or arrays of such devices or mixture or combinations thereof.

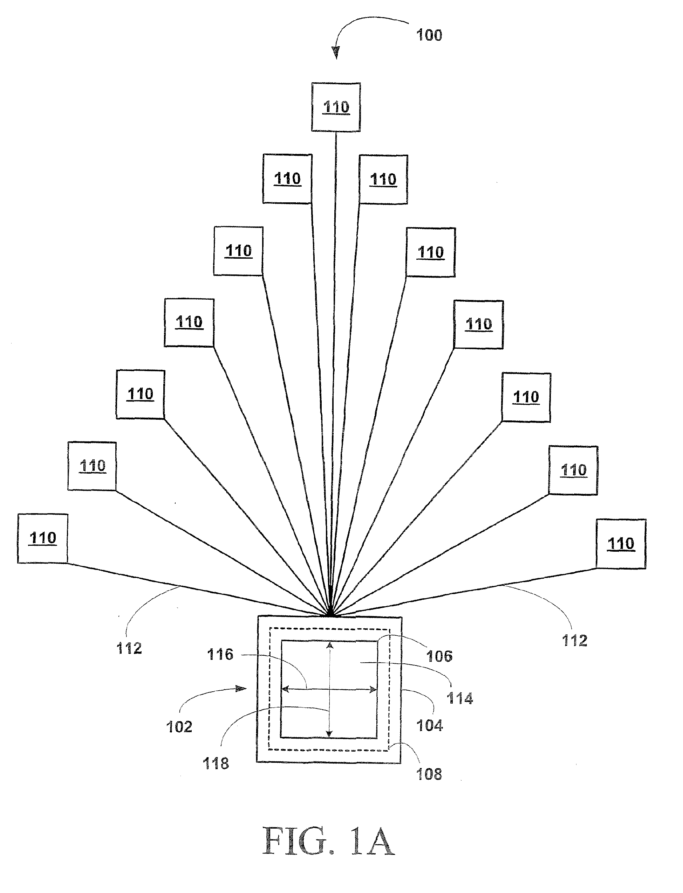

Referring now to to Figure 1A, a preferred embodiment of an MDS control system of this invention, generally **100,** is shown to include an MDS **102** having a housing **104** including an user interface **106** and a processing and control unit **108.** The system **100** also include a plurality of electrical devices **110** in command communication with the unit **108** along pathways **112,** where the communication pathways can include a plurality of electric wires as shown in the figure or can be wireless communication pathways as is well known in the art. Motion of a body part of a human or animal or an obj ect controlled by an animal or human (not shown) about, over or near a surface **114** of the interface **106** in a first direction **126** allows the user to scroll through the electrical devices **110,** and motion about, over or near the surface **114** in a second, different direction **128** allows the user to simultaneously select a given device **110** and a change a value of an attribute of the selected electrical device, where motion in the second direction **118** results in device selection and the direction of motion results in changing the value in a positive or negative direction indicate by the arrows associated with the second direction **118**. Of course, an ordinary artisan should recognize that the directions **116** and **118** need not be orthogonal and need not be in an essential x or y direction as shown in Figure 1A. It should be recognized that motion in the +x direction would scroll through the device list in a forward direction, while motion in the -x direction would scroll through the device list in a backward direction. It should also be noted that the interface can be programmed to sense motion in say the +x direction and continue scrolling forward through the device list until motion in the y direction is sensed at which time device selection and attribute control is invoked.

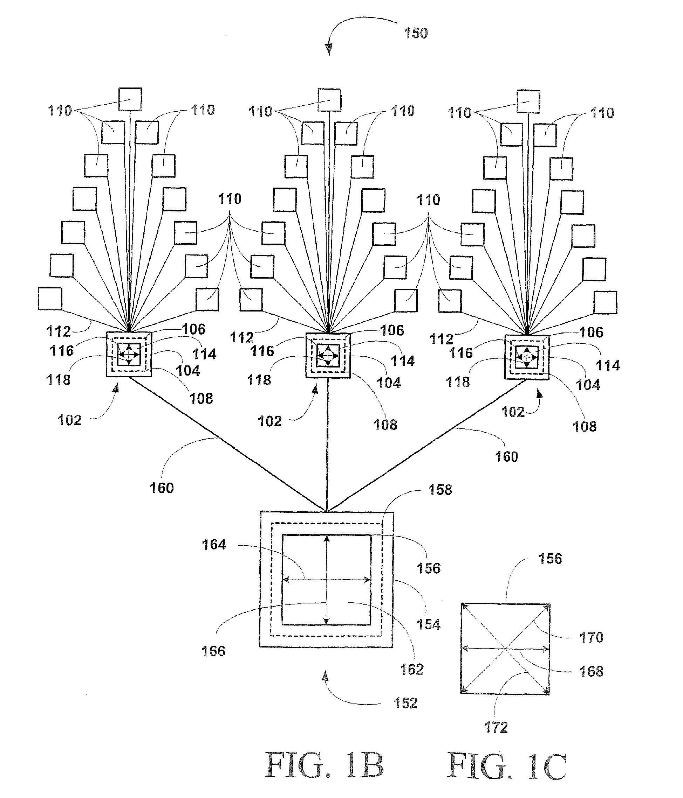

Referring now to Figure 1B, another preferred embodiment of an electrical device control system of this invention, generally **150,** is shown to include a central control unit **152** having a housing **154** including an user interface **156** and a processing and control unit **158.** The central control unit **150** is in command communication via pathways **160** shown here as electric wires with a plurality ofMDSs **102.** One of ordinary skill in the art should recognize that wires **160** can be replaced by any other type of wired communication pathways such as optical fiber, coaxial cable, twisted pairs, shielded twisted pairs or the like or any type of wireless communication pathways such as RF, ultrasound, laser, maser, IR, near IR, microwave, or the like. Motion of a body part of a human or animal or an object under control of an or human (not shown) about, over or near a surface **162** of the interface **156** in a first direction **164** the user to scroll through the MDSs **102,** While, motion about, over or near the surface **162** in a second, different direction **166** the user to scroll through the electrical devices **110** controlled by the selected MDS **102,** which is selected by a scroll when in the second direction **166** is sensed. Motion for a second time in the first direction **164** allows the user to change a value of an attribute of a selected electrical device, where the selection corresponds to a scroll position when motion in the first direction **164** is sensed. Thus, a change in direction causes both a selection and a control function to be simultaneously activated, where the control can be a scroll function in a drill down list hierarchy or a change attribute value function after a device and an associated attribute has been selected. Whether the value of the attribute is increased or decreased depends on whether the motion is to the right or to the left. Moving to the right, the positive x direction, increases the value of the attribute, while moving to the lift, the negative x direction, decreases the value of the attribute.

Of course, an ordinary artisan should recognize that the direction **164** and **166** need not be orthogonal and need not be in an essential x or y direction as shown in here. Moreover, three different directions **168, 170** and **172** could have been used to affect the same result as described above, as shown in Figure 1C. All that is required is that the software must be able to discern a change from one selection format (scrolling through a list) to a selection of a member in the list by a change in the direction of the motion of the body part or an object under the control of a human or animal over the user interface or within the active sensing zone of the interface. Thus, the difference in the direction need only be sufficient to allow software discrimination without frustrating the user because the direction change routine does not permit sufficient angular deviation from a given direction before causing a scroll selection or other list associated function.

As in Figure 1A, each MDS **102** includes a housing **104** an user interface 106 and a processing control unit **108,** which allows for independent user interaction with each switch bypassing the central control unit **152**. Each MDS **102** controls a plurality of electrical devices **110** to the unit 108 by a plurality of electric wires **112**. Motion of a body part of a human or animal or an object under the control of a human or animal (not shown) about, over or near a surface **114** of the interface **106** in a first direction **116** allows the user to scroll through the electrical devices **110,** and motion of the body part about, over or near the surface **114** in a second direction **118** allows the user to a change of an attribute of a selected electrical device, where the motion in the second direction **118** results in device selection and the direction on motion results in changing the value in a positive or negative direction indicate by the arrows associated with the second direction **118.** Of course, an ordinary artisan should recognize that the direction **116** and **118** need not be orthogonal and need not be in an essential x or y direction as shown here.

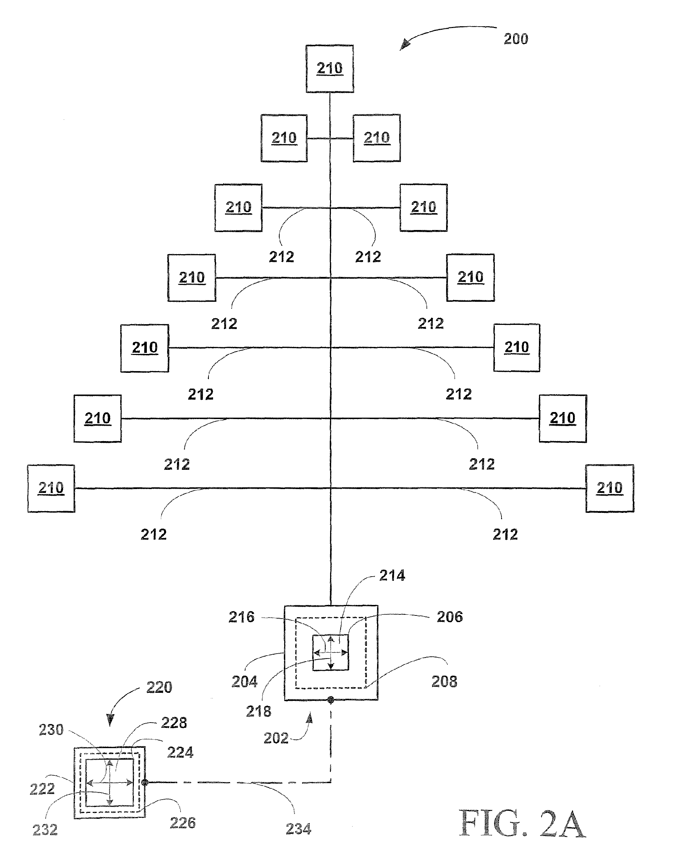

Referring now to Figure 2A, another preferred embodiment of an MDS control system of this invention, generally **200,** is shown to include an MDS **202** having a housing **204** including an user interface **206** and a processing and control unit **208.** The system **200** also includes a plurality of electrical devices **210** in command communication with the unit **108** along pathways **212,** where the communication pathways can include a plurality of electric wires as shown in the figure or can be wireless communication pathways as is well known in the art. Motion of a body part of a human or animal (not shown) on, about, over or near a surface **214** of the interface **206** in a first direction **216** allows the user to scroll through the electrical devices **210,** and motion of the body part on, about, over or near the surface **214** in a second direction **218** allows the user to a change of an attribute of a selected electrical device, where the motion in the second direction **218** results in device selection and the direction on motion results in changing the value in a positive or negative direction indicate by the arrows associated with the direction **218.** Of course, an ordinary artisan should recognize that the direction **216** and **218** need not be orthogonal and need not be in an essential x or y direction as shown in Figure 2A.

The system **200** also includes a handheld or remote control unit **220** having a housing 222 including an user interface **224** and a processing and control unit **226.** Motion of a body par of a human or animal (not shown) on, about, over or or in proximity to a surface **228** of the interface **224** in a first direction **230** allows the user to scroll through the electrical devices **210** as if the interface **206** was being directly activated, and motion of the body part on, about, over or near or in proximity to the surface **228** in a second direction **232** allows the user to a change of an attribute of a selected electrical device, where the motion in the second direction **232** results in device selection and the direction on motion results in changing the value in a positive or negative direction indicate by the arrows associated with the direction **232.** The remote unit **220** is in communication with the MDS **202** via a wire-based and/or a wireless communication pathway or link **234.**

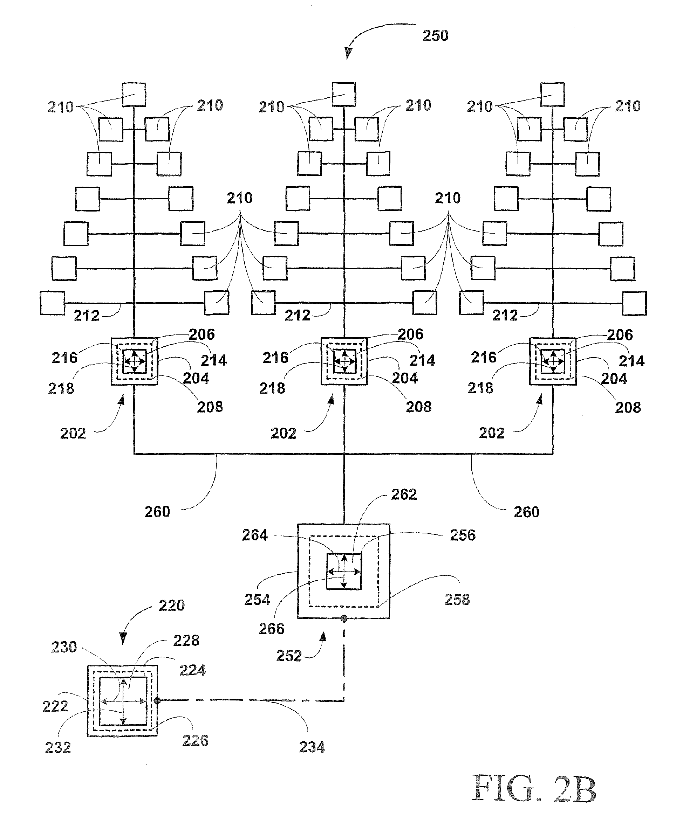

Referring now to Figure 2B, another preferred embodiment of an electrical device control system of this invention, generally **250,** is shown to include a central control unit **252** having a housing **254** including an user interface **256** and a processing and control unit **258.** The central control unit **252** is connected, via electric wires **260** to a plurality of MDSs **202.** One of ordinary skill in the art should recognize that wires **260** can be replaced by any other type of wired communication such as optical fiber, coaxial cable, twisted pairs, shielded twisted pairs or the like or any type of wireless communication such as RF, ultrasound, laser, maser, IR, near IR, microwave, or the like. Motion of a body part of a human or animal (not shown) on, about, over and/or near a surface **262** of the interface **256** in a first direction **264** allows the user to scroll through the MDSs **202.** Motion of the body part on, about, over and/or near the surface **262** in a second direction **266** allows the user to a scroll through the available electrical devices **210** controlled by the selected switch, which is selected by a scroll position when the body part moves in the second direction **266.** Motion for a second time in the first direction **264** allows the user to change a value of an attribute of a selected electrical device, which is selected by a scroll position when the body part stops moving in the second direction **266** and starts moving, for a second time, in the first direction **264.** Whether the value of the attribute is increase or decreased depends on whether the body part moves to the right or to the left. Moving to the right, the positive x direction, increases the value of the attribute, while moving to the lift, the negative x direction, decreases the value of the attribute.

As in Figure 2A, each MDS **202** includes a housing **204** including an user interface 206 and a processing and control unit **208,** which allows for independent user interaction with each switch bypassing the central control unit **152.** Each MDS **202** controls a plurality of electrical devices **210** connected to the unit 208 by a plurality of electric wires **212.** Motion of a body part of a human or animal (not shown) about, over or near a surface **214** of the interface **206** in a first direction 216 allows the user to scroll the electrical devices **210,** and motion of the body part about, over or near the surface **214** in a second direction **218** allows the user to a change of an attribute of a selected device, where the motion in the second direction **218** results in device selection and the direction on motion results in changing the value in a positive or negative direction indicate by the arrows associated with the second direction **218.** Of course, an ordinary artisan should recognize that the direction **216** and **218** need not be orthogonal and need not be in an essential x or y direction as shown here.

As in the system **200**, the system 250 also includes a handheld or remote control unit 220 having a housing 222 including an user interface 224 and a processing and control unit **226** Motion of a body part of a human or or an object under the control of a human or an animal (not shown) on, about, over or near or in proximity to a surface 228 of the interface 224 in a first direction 230 allows the user to scroll through the MDSs 202 as if the interface 256 was being directly activated. Motion of the body part on, about, over or near or in proximity to the surface 228 in a second direction 232 allows the user to scroll through the devices **210** controlled by a selected MDS **202,** selected by the change in direction. While, motion in the first direction 230 for a second time, results in a change of a value of an attribute associated with a selected electrical device, selected by the change in direction ofmotion. The remote unit 220 is in communication with the control unit 252 via the wire-based and/or a wireless communication pathway or link 234.

Although Figures 1A&B and 2a&B are shown with either a single MDS and associated devices or a central control unit controlling separate MDSs, each MDSs having associated devices, each MDS does not have to directly control the devices, which may be part of a power bank. Thus, the MDSs can be in electronic communication with the power bank or a computer controlling the power bank, where the MDSs would send command signals to the power bank controller or to a computer controlling the power bank to execute the commands set to it by the user-interface interactions. Moreover, the remote control unit could send its commands to a central computer which would then route the commands to an appropriate MDS, power bank or device. Thus, the interfaces and MDSs ofthis invention can be integrated into a homes existing computer control and monitoring system, greatly expanding the computer control efficiency and enhancing user friendly interactions.

### Illustrative Examples of General User Interfaces of this Invention

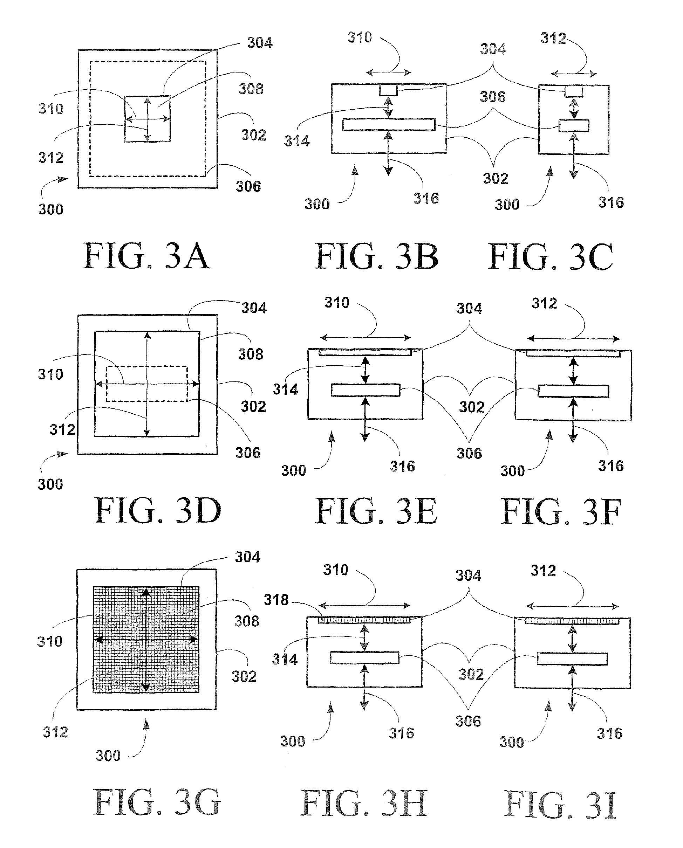

Referring now to Figures 3A-C, a preferred embodiment of an MDS or control unit, generally 300, of this invention is shown to include a housing 302 including an user interface 304 and a processing and control unit 306. Motion of a body part of a human or animal (not shown) in proximity to a surface 308 of the interface 304 in a first direction 310 allows the user to scroll through a list of items such as devices or MDSs. While motion of the body part in proximity to the surface 308 in a second direction 312 allows the user to either scroll through another list of items or to affect a change in a value of an attribute associated with a device. Motion in the first direction 310 for a second time, would allows the user to either scroll through another list of items or to affect a change in a value of an attribute associated with a device, and so on. The interface 304 is in communication with the control unit 306 via a communication pathway 314, and the control unit 306 is in communication with MDSs or devices via communication pathway 316. The pathways 314 and 316 can be wire-based or wireless depending on design criteria. In this embodiment, the user interface 314 is a relatively small device that senses motion proximate to the device. Such devices include optical devices such as those devices used in optical mouse devices manufacture by MicroSoft Corporation and others. In fact, on such device is simply a mouse that is turned over and the optical plane slightly realigned.

Referring now to Figures 3D-F, another preferred embodiment of an MDS or control unit, generally **300,** of this invention is shown to include a housing **302** including an user interface **304** and a processing and control unit **306.** Motion of a body part of a human or animal (not shown) in contact with or in proximity to a surface **308** of the interface **304** in a first direction **310** allows the user to scroll through a list of items such as devices or MDSs. While motion of the body part in proximity to the surface 308 in a second direction 312 allows the user to either scroll through another list of items or to affect a change in a value of an attribute associated with a device. Motion in the first direction **310** for a second time, would allows the user to either scroll through another list of items or to affect a change in a value of an attribute associated with a device, and so on. The interface **304** is in communication with the control unit **306** via a communication pathway **314,** and the control unit **306** is in communication with MDSs or devices via communication pathway **316.** The pathways **314** and **316** can be wire-based or wireless depending on design criteria. In this embodiment, the user interface **304** is larger the interface of Figures 3A-C, an sensing motion over its surface **308**, either by direct contract, e.g., a mouse pad, or with or without direct contact, e.g., a device sensitive to changes in on the surface **308**. Impedance based devices can look at impedance, inductance, or capacitance to determine the area of contact, where direction is by following the motion and converting the motion into a motion direction.

Referring now to Figures 3G-I, another preferred embodiment of an MDS or control unit, generally **300,** of this invention is shown to include a housing **302** including an user interface **304** and a processing and control unit **306.** Motion of a body part of a human or animal (not shown) in contact with or in proximity to a surface **308** of the interface **304** in a first direction **310** allows the user to scroll through a list of items as devices or MDSs. While motion of the body part in proximity to the surface **308** in a second direction **312** allows the user to either scroll through another list of items or to affect a change in a value of an attribute associated with a device. Motion in the first direction **310** for a second time, would allows the user to either scroll through another list of items or to affect a change in a value of an attribute associated with a device, and so on. The interface **304** is in communication with the control unit **306** via a communication pathway **314,** and the control unit **306** is in communication with MDSs or devices via communication pathway **316.** The pathways **314** and **316** can be wire-based or wireless depending on design criteria. In this embodiment, the user interface **304** is larger than the interface of Figures 3A-C, an sensing motion over its surface **308,** either by direct contract or proximity to the surface **308.** Unlike the interface Figures 3D-F, the interfaces of these figures, are devices including a large number of sensing elements **318.** Each element **318** having an ON state and an OFF state to determine whether motion has occurred and if so in what direction.

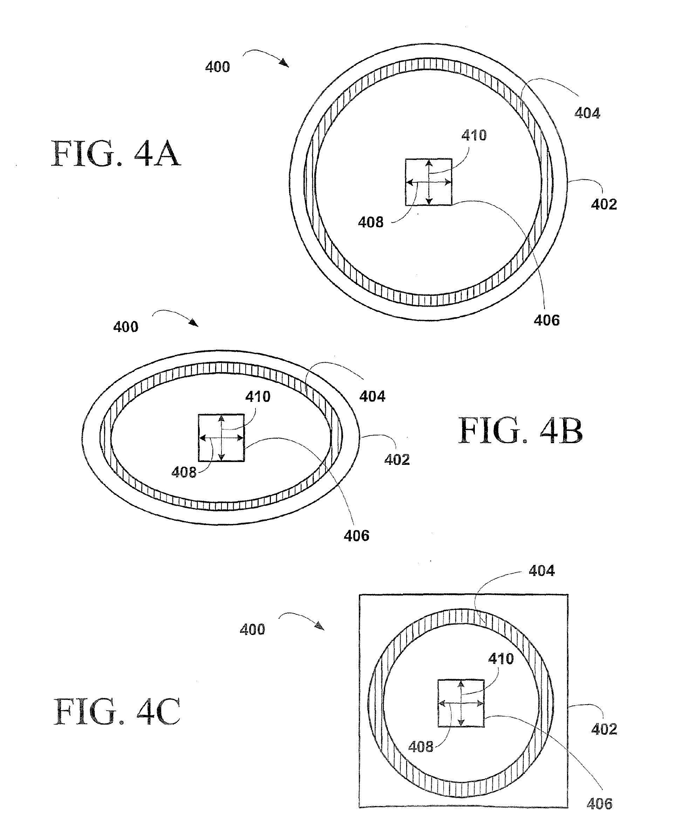

Referring now to Figures 4A-C, three preferred embodiments of an interface, generally **400,** of the present invention is shown to include a housing **402**, a selection ring **404** and a motion detector **406** able to discern motion in an x direction **408** and a y direction **410.** The ring **404** is touch sensitive or active. The ring **404** can includes discrete positions corresponding to each device or MDS controllable by the interface, or moving a body part over the ring in a clockwise or counterclockwise direction could result in list scrolling.

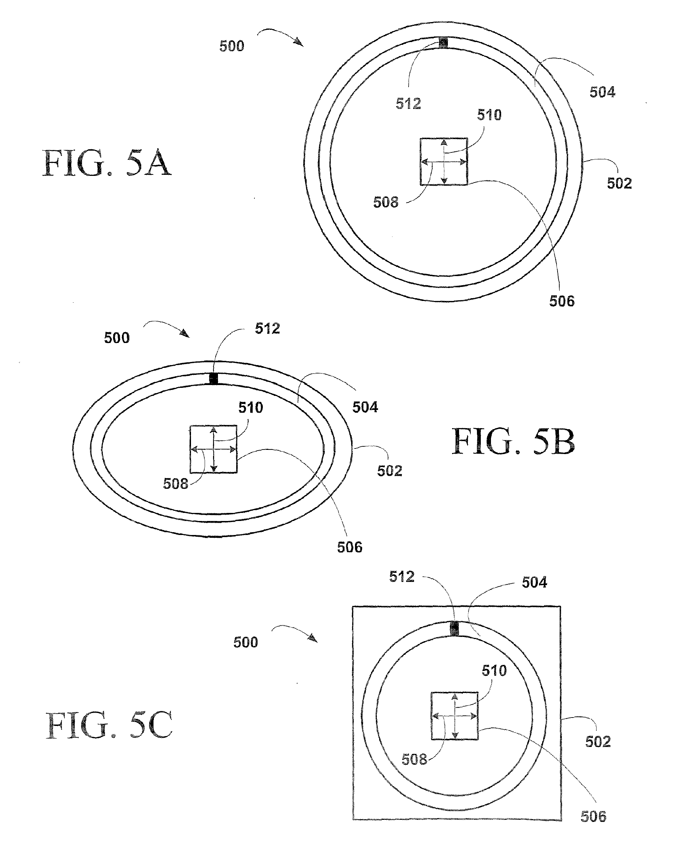

Referring to Figures 5A-C, three other preferred embodiments of an interface, generally **500**, of the present invention is shown to include a housing **502**, a selection ring **504** and a motion detector **506** able to discern motion in an X direction **508** and a y direction **510**. The ring **504** is a slidable ring including a slide nob **512**, where the location of the nob **512** corresponds to a device or MDS controllable by the interface.

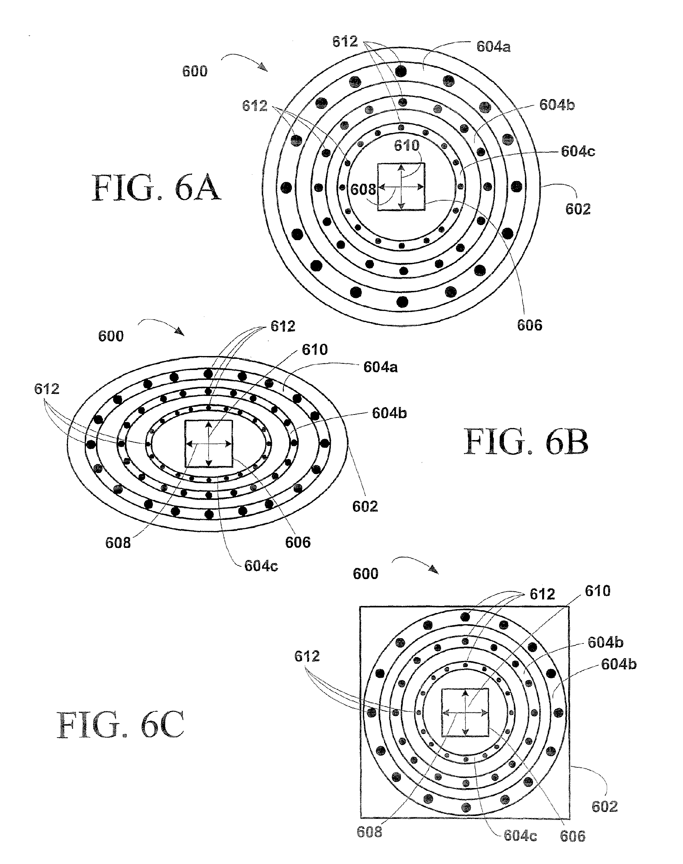

Referring now to Figures 6A-C, three other preferred embodiments of an interface, generally **600**, ofthe present invention is shown to include a housing **602,** three selection rings **604a-c** and a motion detector **606** able to discern motion in an x direction **608** and a y direction **610**. Each ring **604a-c** including a plurality of selection buttons **612,** where each button **612** corresponds to a device or MDS controllable by the interface.

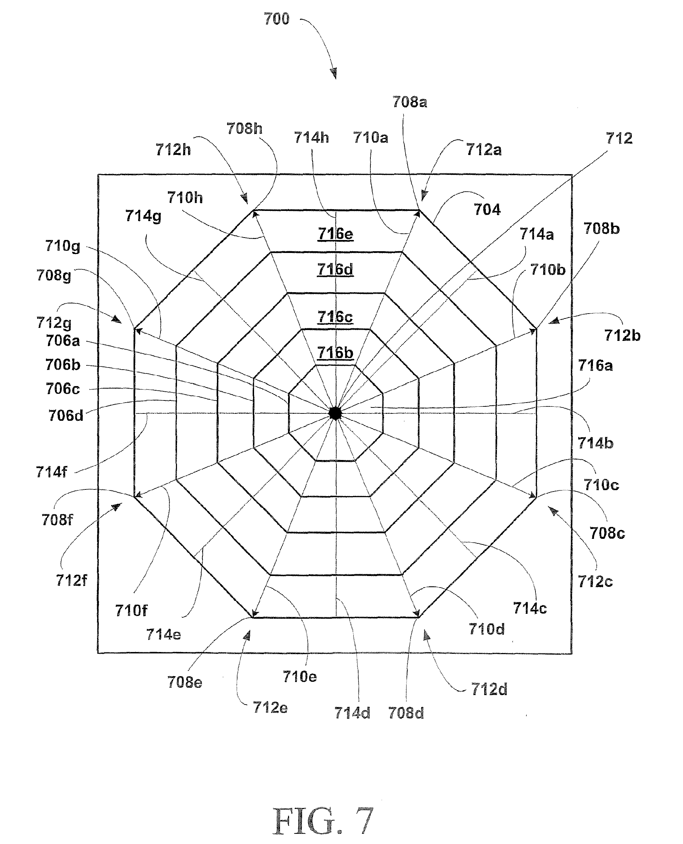

**Referring** now to Figure 7, another preferred embodiments of an interface, generally **700**, of the present invention is shown to include a housing **702,** a physical or computer generated polygon outer octagon **704,** and physical or computer generated inner concentric octagons **706a-d.** Each vertex **708a-h** of the octagon **704** corresponds to one of eight devices (not shown) controllable by the interface **700.** Motion along lines 710a-h or within sector **712a-h** defined by adjacent dashed lines **714a-h** including each line **710a-h,** changes a value of an attribute of the devices corresponding to the vertices **704.** Concentric areas **716a-e** correspond to a given attribute value. Having moved a body part from a center position **718** of the interface **700** in the direction of vertex **708a** to concentric area or zone **716c,** and then moving the body part clockwise or counterclockwise within the area **716c,** immediately sets each corresponding device to the same attribute value for the zone **716c** or a proportional value corresponding to the area or zone **716c.** That is, if one device has an attribute value range of 0 to 100, while another has an attribute value range of 0 to 500, the adjustment of the two devices would be proportional to the range.

All of the illustrative examples of interfaces of this invention can also include user feedback devices to indicated which item in a selection list is being selected. The feedback devices can be any devices for identifying to the user the items in a list in a unique manner. Such devices can by visual, acoustic, or tactile or mixtures thereof. Thus, the interface can include a display device which would display a word, phrase, icon or the like to identify the item during a scrolling operation and to continuously display the item when it is selected. The display could then include a range indicator for attribute values which would change in response to movement by the user, e.g, a volume indicator for a speaker, water temperature indicator for showers or the like. The feedback device could also be a generator which could state the devices during a scrolling operation and then state the of the device selected the direction of attribute value change. The feedback device could also emit a sound code, optical code or tactile code unique for each item in a list and a unique code to indicate the item during a scrolling operation or to identify a selection and to identify the direction of change of an attribute value. Such feedback devices can be tailored to users with different and special needs such as the blind, deaf, or the like.

The interfaces of this invention can also be made air tight and/or water tight so that the devices can be used in clean room environment or in areas that get wet such as showers, baths, or the like or underwater such as in pools, hot tubes or the like. The interfaces can be made so that they can be routinely sterilized or disinfected, provided, of course, that the sterilization conditions do not adversely harm the electronic components in the interface.

### Illustration of List Selection and Attribute Selection and/or Control

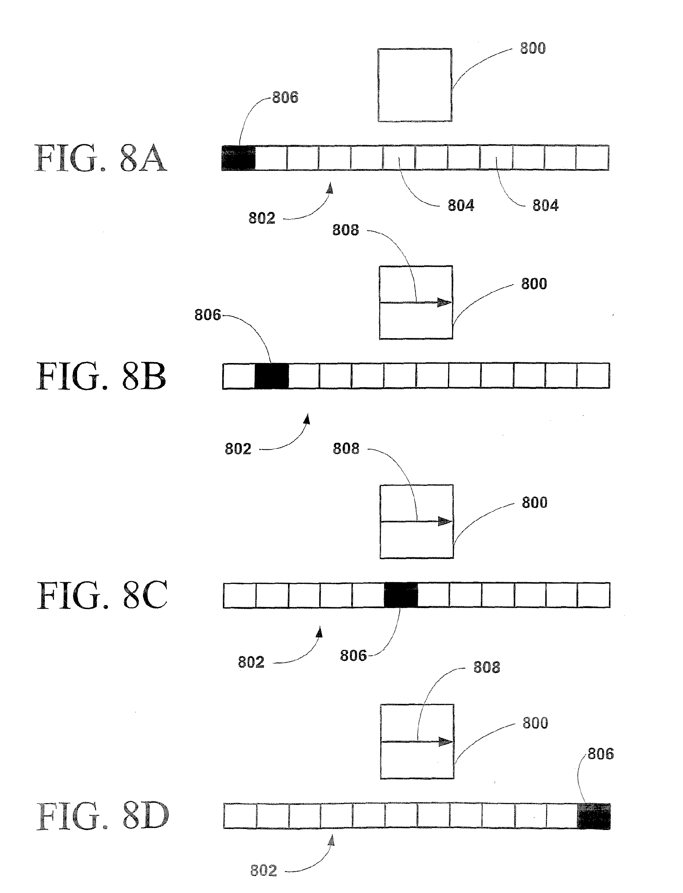

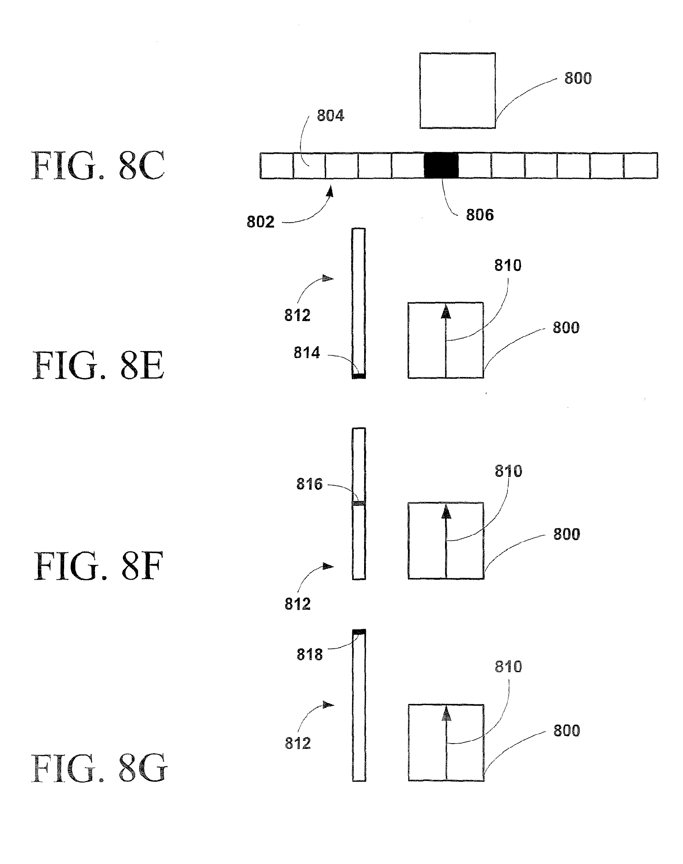

Referring now to Figures 8A-G, the method of operation of an interface, generally **800,** of the present invention is shown. Looking a Figure 8A, the interface 800 is shown in its initial or inactive state (no motion of a body part in contact with or proximity to the interface has been detected) and a selection list **802** associated with the interface is shown below the interface **800** and includes device indicator boxes **804** for pictorial representation of the list, which may only exist in computer memory. Of course, the list **802** and boxes **804** could appear in a display associated with the interface (not shown). The list **802** is shown in an initial state, where an active box **806** represents active device, and here is the first box in the list. Looking a Figure 8B, the interface **800** has detected motion in a positive x direction indicated by the arrow headed line segment 808 and the interface responses by scrolling through the list **802** one box **804** at a time. Motion in the positive x direction has caused the active box **806** to change by one position. Looking at Figure 8C, the interface **800** has continued to detect motion in the positive x direction, causing further scrolling through the list **802** and changing the active box **806.** Looking a Figure 8D, the interface **800** has continued to detect motion in the positive x direction, causing further scrolling through the list **802** and changing the active box **806** to the last box in the list **802.** lf the user where now to move a body part in the negative x direction, then the scrolling would proceed from the last box in the list to the first box in the list. Moreover, the initial state of the list when motion is detected can be anywhere in the list.

Looking at Figures 8C and 8F, the interface **800** has detected in the positive y direction indicated by the arrow headed line segment **810** and the interface responses by the device represented by the box **806.** Motion in the positive y direction will cause a change in the value of active attribute ofthe activated device depicted here by a value g auge **812.** the gauge can exist in a computer memory or may be displayed in a display associated the interface **800.** For single devices such as lights, motion in the y control the value of the attribute, such as the output of a light. As shown in Figure 8E, the value is at its minina position **814.** Looking a Figure 8F, the interface **800** continues to detect motion in the positive y direction causing the attribute value to chaiiac its minimum position **814** to an active position **816,** shown here at the mid point of the value range indicated by the gauge **812.** If the user stopped the motion in the positive y direction, then the device attribute would be at ½ is maximum value. Looking a Figure 8G, the interface **800** continues to detect motion in the positive y direction causing the attribute value to change to a new active position **818,** shown here at the maximum value of the value range indicated by the gauge **812.** Again, motion in the negative y direction will result in a decrease in the value of the attribute. For system of this invention having multiple selection lists, then changing to motion in the y direction would activate a sublist, and changing to motion in the x direction would either drill down or up the selection lists hierarchy. Of course, drilling down would eventually get the user to an attribute control functionality as shown in Figures 8E-G, which could be a y or x motion. Moreover, drilling up would eventually get the user to the top level list. Alternatively, list drilling could be achieve by activating the interface and then holding the body part still for a set time prior to resuming motion. The pause would cause the software to transition either up or down a list hierarchy.

### Specific Embodiments of Control Systems of this Invention

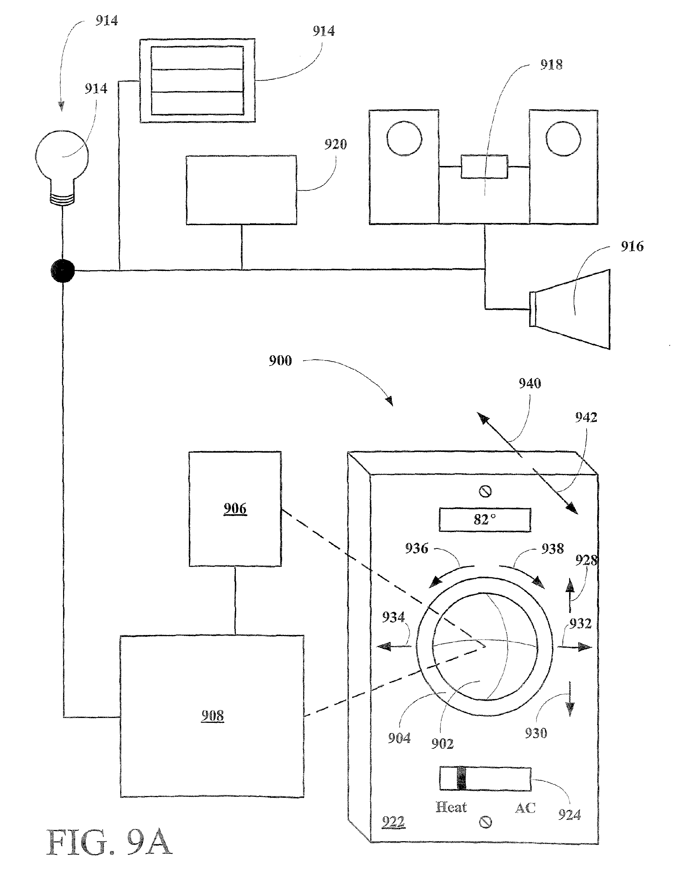

Referring now to Figure 9A, a preferred embodiment of an electric switch apparatus **900** of the present invention includes at least one movement sensitive form **902** and a housing **904** conformed to receive and retain the movement sensitive form **902.** An optical sensor **906** is conformed to receive physical movement signals from the movement sensitive form **902** and convert the physical movement signals into input control signals, as will be discussed more fully hereafter. A digital processing unit (DPU) or microprocessor **908** is connected to the optical sensor **906** and converts input control signals to output control signals. At least one independent electrical device **910** is connected to or in control communication with the microprocessor **908.**

The independent electrical device **910** may take the form of any electrical device now known or hereafter developed. In particular, the independent electrical device **910** maybe a lighting device **912,** a motion device **914,** a security control device **916,** a sound device **918,** and/or a temperature control device **920.** For the purpose of explanation and not by way of limitation, the lighting device **912** maybe a lamp, the motion device **914** may be louvers on an AC vent and/or window blinds, the security control device **916** may be a household alarm, the sound device **918** may be a stereo system, and the temperature control device **920** may be a heating and air-conditioning unit, for example.

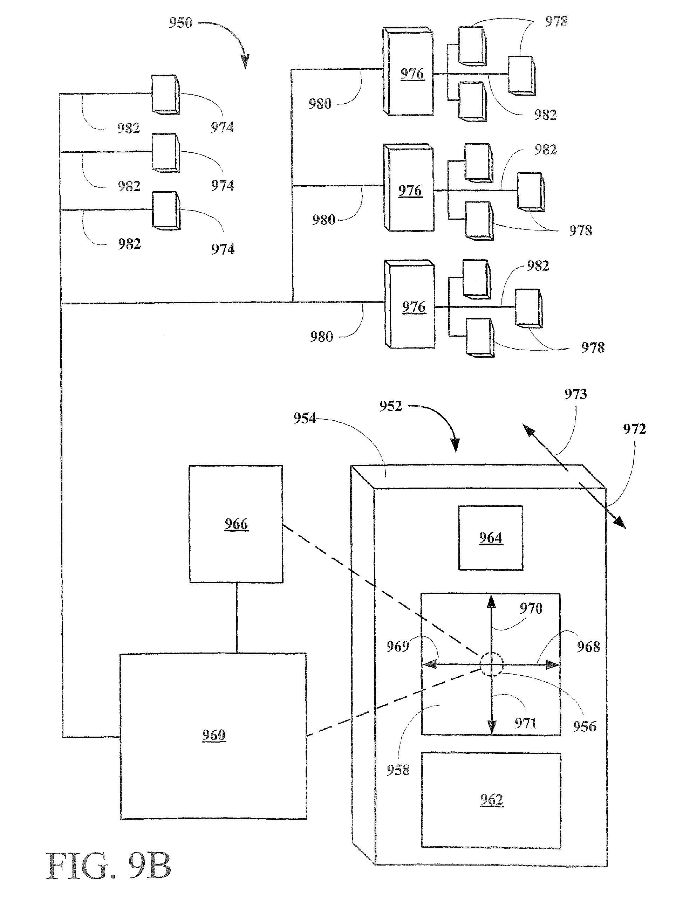

Still referring to Figure 9, the embodiment of the invention illustrated discloses electrical switch apparatus **900** conformed to control the temperature control device **920.** In this embodiment, a face plate **922** provides user controls as known in the art. That is, a soft switch, a button, an active area or a manual heat/cool switch **924** is provided so that the user may choose between heating and cooling. Also, the room temperature is indicated in a temperature display device **926.**

In use, movement sensitive form **902,** in this instance in the form of a sphere, is rotated in the direction of up arrow **928** to raise the temperature and toward down arrow **930** to lower the temperature. The physical movement of movable form **902** is sensed by optical sensor **906** and converted to input control signals. In another form of the invention, movement sensitive form **902** is a stationary form of any shape, flat, spherical or other, and it receives and transfers the movement of a user about the movement sensitive form **902** to the optical sensor **906.** In either case, these input control signals are sent to microprocessor **908** where they are converted to output control signals. These output control signals are then sent to temperature control device **920** in a manner corresponding to the user's desired result.

In one aspect ofthe invention, movement of rotationally movable movement sensitive form **902** in one direction, for example in the direction of direction arrow **932** or direction arrow **934,** results in the creation of output control signals at microprocessor **908** for the selection of one of a plurality of independent electrical devices **910**. For example, temperature display device **926,** in this embodiment, displays which particular independent electrical device **910** has been selected by the movement of rotationally movable form **902** in the direction of either arrow **932** or **934.**

Once the desired independent electrical device **910** has been selected, the user moves movable form **902** in the direction of up arrow **928** or down the arrow **930** to the desired result. It should he noted, that the most basic desired result is simply to manipulate one or more of the independent electrical device **910** illustrated by turning them "ON". As previously disclosed, the electrical switch **900** of the invention does not involve the mechanical movement of the on-off switch as is now known in the prior art. Instead, as illustrated in ***Figure 18***, the electrical switch **900** of the present invention is always directly connected to the independent electrical devices **910** but by the control provided by microprocessor **908** only when a particular electrical device **910** is selected for manipulation by a user is enough current allowed to flow so as to effect actuation of the device.

In another aspect of the invention, once the desired independent electrical device **910** has been selected and turned on, continued movement of rotationally movable form **902** provides variable control of the selected independent electrical device **910.** That is to say, the lights can be dimmed, the shades lowered, the sound raised, the temperature lowered, the alann turned down and so forth. In a further aspect of the invention, output signals for this variable control continue as long as movement of the rotationally movable form **902** continues until normal upper and lower stop limits are reached for the selected independent electrical device **910.** Again, it should be noted that in a preferred embodiment, movement sensitive form **902** is stationary and simply transmits the movement of the user" about its form" to the optical sensor **906.** In this regard, it should also be noted that the term "about its form" includes movement that is "touchless" in which the user does not have to make contact with movement sensitive form **902** and includes physical movement and touching of a stationary movement sensitive form **902.**

In a further aspect of the invention, where, for example, a single independent electrical device **910** is connected to electrical switch apparatus **900,** movement of rotationally movable form **902** in the direction of arrow **932** or arrow **934** turns the device on or off, as that term is used herein. In this embodiment, thereafter, movement of rotationally movable form **902** in the direction of up arrow **928** or down the arrow **930** provides for variable control of the independent electrical device **910** to brighten or dim it as desired.

In another aspect of the invention, housing **904 is** movable in the direction of arrows **936** and **938** such that the movement of housing **904** enables a user to select a particular independent electrical device **910** from a a plurality of the independent electrical devices **910** connected to microprocessor **908.** In this embodiment, thereafter movement sensitive form **902** is used to activate the selected independent electrical device **910** and/or variably control the operation of the selected electrical device **910** as discussed above.

In a further aspect of the invention, movement sensitive form **902** is in the form of a sphere as illustrated in the figures. Certainly, any desired, convenient, aesthetically pleasing form is well within the scope of the invention. In a further aspect of the invention, movement sensitive form **902** is lighted. Lighting may be provided by any means now known or hereafter developed and may serve the function of a night light, for example. In another aspect of the invention, movement sensitive form **902** is filled with fluid with suspended material. In yet another aspect ofthe invention, housing **904** is conformed to allow movement sensitive form **902** to move in and out in the direction of arrows **940** and **942.** The movement of movement sensitive form **902** in the direction of arrows **940** and/or **942** may serve the purpose of selecting desired independent electrical devices **910** and/or once the desired independent electrical device **910** is selected, acting to turn the device on and off, leaving variable control of the operation of the device to movement about the movement sensitive form **902** in the direction of arrows **928** and **930,** for example.

Optical sensor **906** may take the form of any known optical sensor or any optical sensor hereafter developed. For example the optical sensor sold by Agilent Technologies under the brand-name HDNS-2000 is an acceptable optical sensor for the purposes of the present invention. Further, other sensors may be utilized other than optical so long as the objects of the invention are achieved. Additionally, microprocessor **908** is any microprocessor/state machine controller capable of controlling an AC voltage source magnitude to multiple groups ofAC power apparatus. In the case of the present invention, the input control signals to the microprocessor **908** are generated by the optical sensor **906** which detects the physical movement about movement sensitive form **902** and converts the movement into quadrature signals proportional to the movement. A wide variety of useful embodiments are within the ordinary skill levels of those in the art. For example, as discussed above, microprocessor **908,** in one aspect of the invention, detects two types of input quadrature signals for user control. The first signal determines which group of independent electrical devices **910** is to be controlled. The second signal the voltage magnitude applied to the selected independent electrical device **910,** thus variable control. A suitable microprocessor **908** is the Z8E001100PBC brand integrated circuit microprocessor developed by the Zilog Company of California.

Microprocessor **908,** in a further embodiment, receives input signals from RS232 or PS/2 devices. In this implementation, microprocessor **908** communicates with the RS232 or PS/2 serial device control circuit. It should be noted as a further aspect of the present invention, that the input signal may be generated from the detection of the movement about movement sensitive form **902** in the form of physical movement of the form or the detection of movement by means of visual or infrared light, heat, pressure, optical, magnetic flux, electrostatic field, and/or vibration detection circuits.

Referring now to Figure 9B, another preferred embodiment of all electric switch apparatus **950** of the present invention includes a control unit **952** comprising a housing **954,** an optical sensor **956** place behind a clear plexiglass cover **958,** a processing unit **960** (preferably a DPU), a display unit **962** and a security finger print sensor **964.** The control unit **952** can be handheld or mounted on a wall, on the surface of a desk or counter or on or in any other fixture or object. The optical sensor **956** in conjunction with its associated microprocessor **966** converts physical movement into output signals to the processing unit **960** which uses the sensed motion to activate list (menu) scroll functions or activate attribute change functions. The processing unit **960** also sends output signals to the display **962** so that the user will know what action is being performed (list scrolling or device attribute control). The processing unit **960** also receives output from the finger print sensor **964,** which is used to verify user authorization to use the apparatus **950.** The optical sensor **956** comprises an HP optical sensor used in its optical mouses and is capable of detecting motion at a given focal plane at or above the surface of the plexiglass cover **958.** For simplicities sake, motion in three direction are indicated: motion in a positive x direction **968,** in a negative x direction **969,** in a positive y direction **970,** in a negative y direction **971,** in a positive z direction **972,** and in a negative z direction **973,** where motion in the z directions, **972** and **973,** are associated with moving in or out of the active zone ofthe optical sensor **956.** The control unit **950 can** be connected direction to a plurality of devices **974,** a plurality of multi-device switches **976,** which are in turn connected to a plurality of devices **978** or to a mixture of devices **974** and multi-device switches **976** with their associated devices **978.** The multi-device switches **976** can be identical to the control unit **950** or can be a simplified version thereof lacking the user interface, display and/or finger print sensor. Of course, the switches **976** must be in communication with the control unit **950** either via wired communication links or wireless communication links **980**. Moreover, the control unit **950** or the switches **976** must be connected to the electrical devices **976** and **978** in such as way that they can turn the device on and off and vary any attribute associated with the devices for the attributes full range via links **982.** Furthermore, the apparatus **950** can include remote control devices as described in Figures 1, 2, and 11-13.

### Illustrative Examples of User Interfaces of this Invention

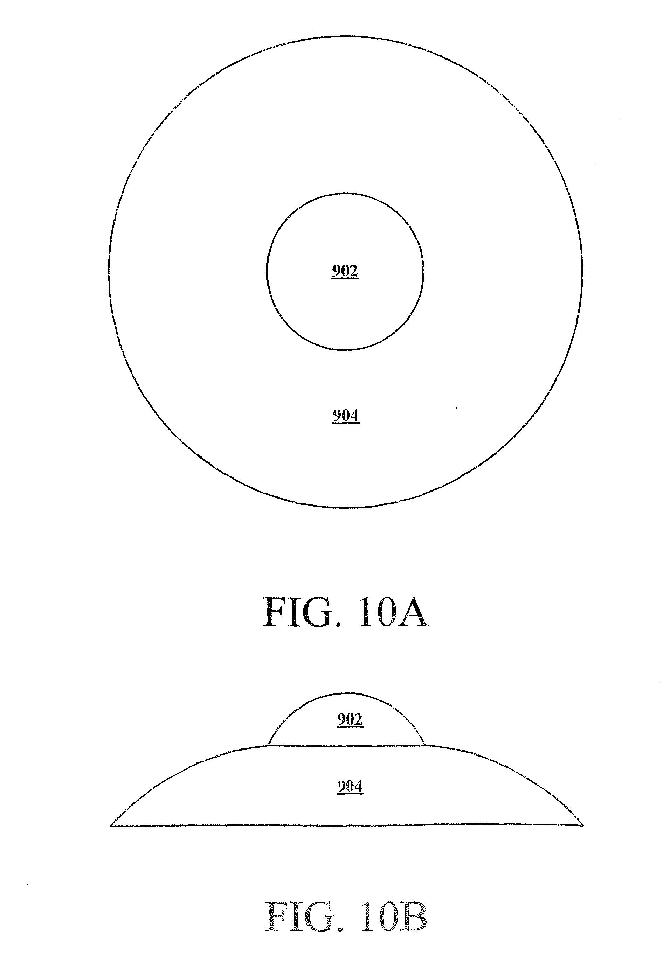

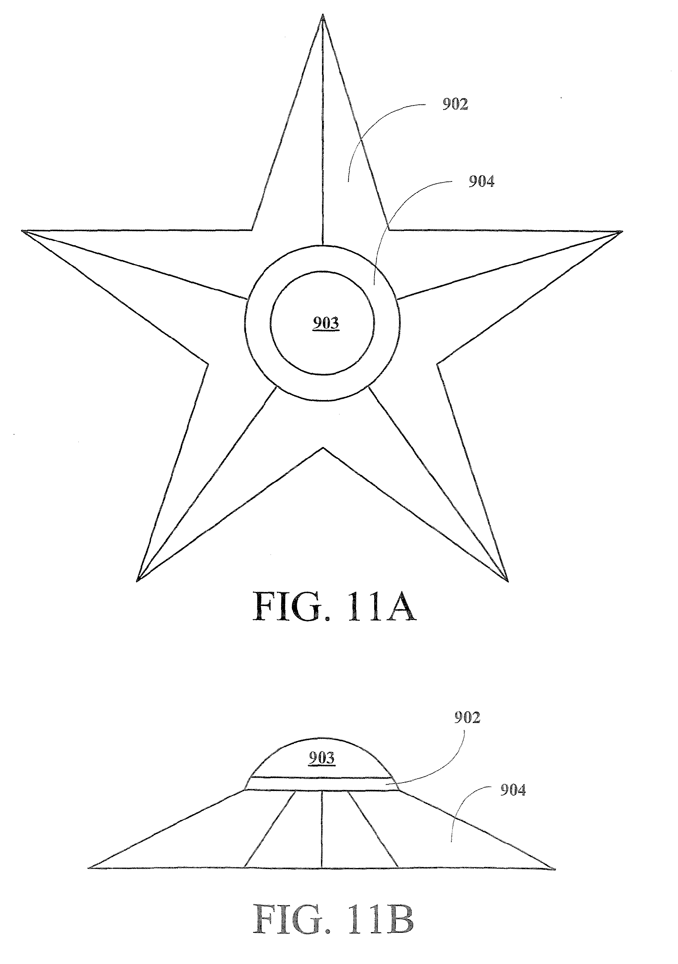

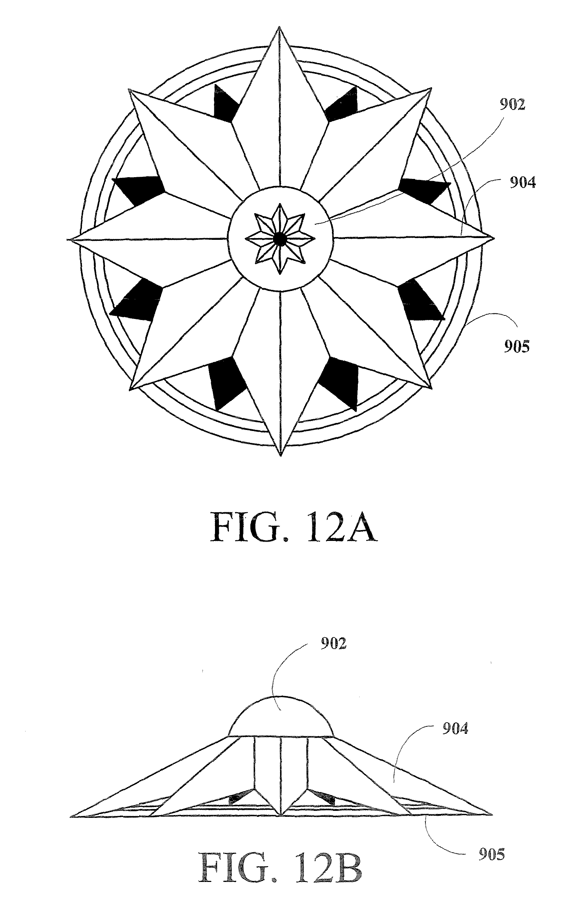

The next series of drawings depict a variety of combinations of user interface designs and constructions for use in this invention. Looking at Figures 10A and B, the housing **904** is disk shaped and the movement sensitive form **902** is a rotatable sphere or ball. Looking at Figures 11A and B, the housing **904** is a five pointed star shape and the movement sensitive form **902** is a rotatable sphere or ball having a central region **903** adapted to receive a logo such as the seal of a state, a corporate logo or the like. Looking at Figures 12A and B, the housing **904** is a multi-pointed shape rotatable around a base **905** and the movement sensitive form **902** is a rotatable hemisphere.

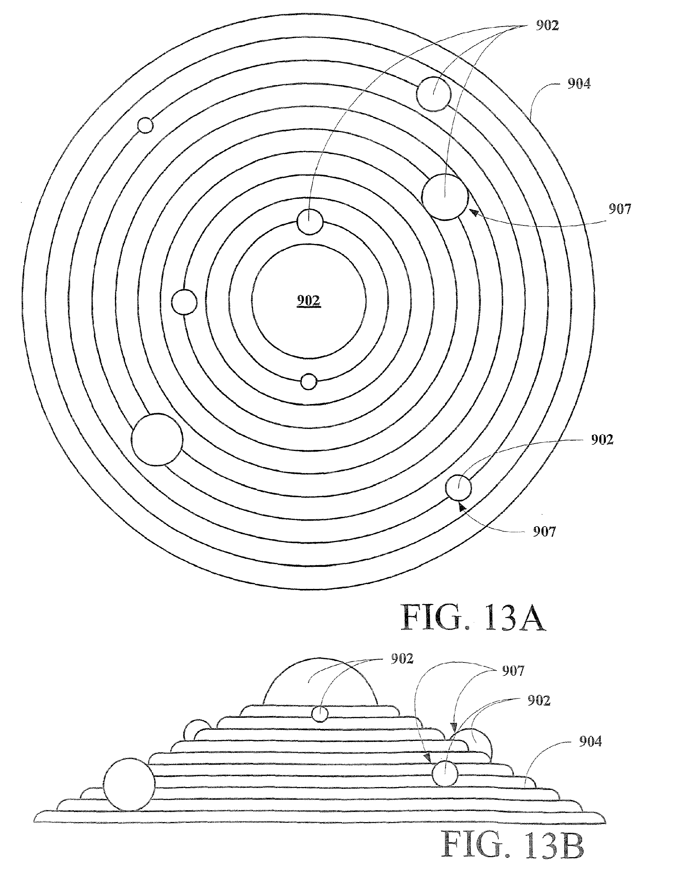

Referring now to Figures 13A and B, another preferred embodiment of an apparatus of this invention is shown to include multiple movement sensitive forms **902** in conforming retainers **907** in a housing **904.** In this aspect of the invention, literally the whole universe of electrical devices **910** maybe encompassed within a single electrical switch apparatus **900.** The importance or function of the electrical device **910** may be represented by the size of the movement sensitive form **902** in relation to the whole "planetary" system. Certainly, multiple electrical switch apparatuses **900** disclosed in Figures 10 through 12 may be utilized to provide room wide control of all the independent electrical devices **910** in a single room, for example, under control of a central control interface.

### Electronic Construction of Circuits of Preferred Embodiment of the MDSs of this Invention

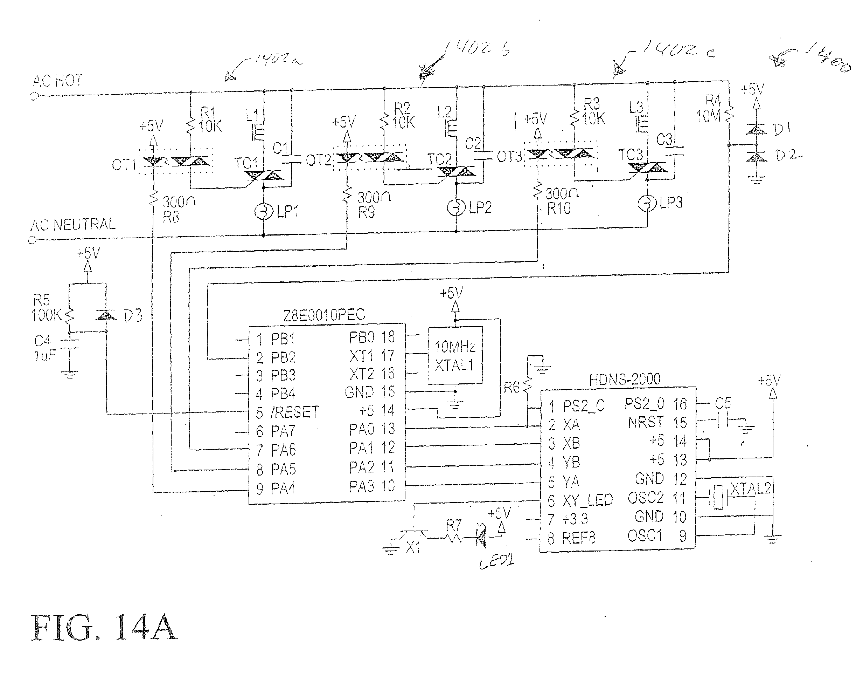

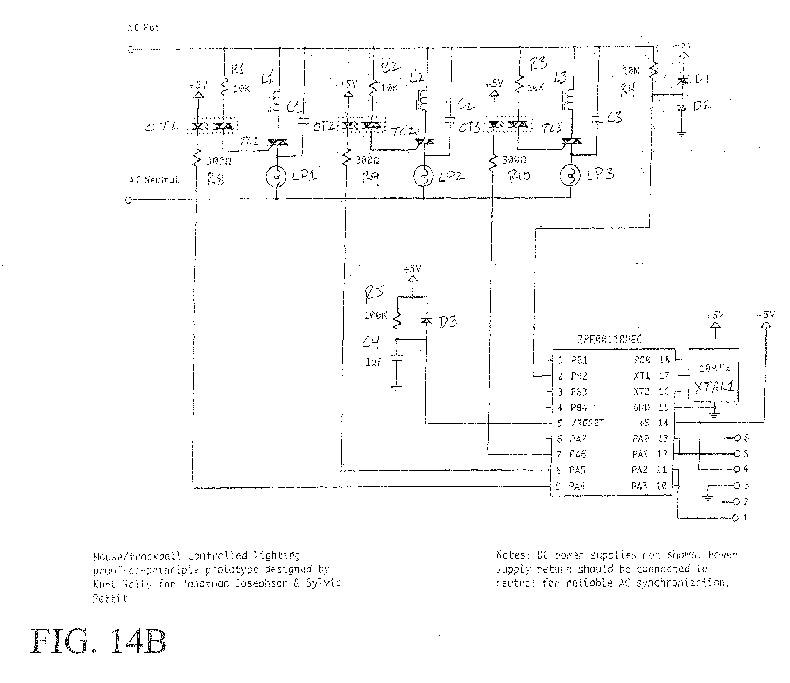

Referring now to Figure 14A, a circuit diagram **1400** of a preferred embodiment of an electrical switch apparatus **900** (Figure 9) of the present invention is shown. With reference to the circuit diagram, components **D1**, **D2,** and **R4** create a 60 Hz square wave used to the microcontroller to power line frequency via a port **PB2**. The circuit diagram **1400** includes three identical load circuits **1402a-c,** only one of which will be described. **R8** and **OT1** provide an isolated command signal to trigger triac **TC1,** which allows current flow to a load **LP1** shown here as a lamp. A low signal from **PA4** signals the light to on. Inductor **LI** and capacitor **CI** provide surge limiting and EMI filtering and **R1** places a balancing load across **OT1. LI** reduces current surge and **CI** reduces electromagnetic emissions (EMI). While the load **LP1** is a resistive lamp type device, *i.e.*, a light, but can be any other appliance which requires electric energy to power and can be controlled by changing either the voltage and/or current being supplied to the appliance.

Components **R5, C4** and **D3** provide a power-on reset for the **Z8 CPU**. A crystal **XTAL1** sets the **Z8 CPU** to run at a precise frequency. This frequency is used by the phase control algorithm to vary the amount of time that electricity is allowed to flow to an appliance and thereby to increase or decrease current flow to an associated device such as brighten or dimming a light.

The **Z8E0010PEC** is a simple microprocessor used to control the lamps and interpret command signals. The **HDNS-2000** is a motion sensor used for rotary or translational inputs. Components **R7, XI** and **LED1** provide light necessary for the **HDNS-2000. R6** is a pull down resister which indicates that the **HDNS-2000** should operate in quadrature output mode, as opposed to PS/2 mode. **C5** provides a power-on reset for the **HDNS-2000,** while **XTAL2** sets the master clock for the **HDNS-2000.**

Referring now to Figure 14B, a circuit diagram of another preferred embodiment of an electrical switch apparatus **900** (Figure 9) of the present invention is shown. With reference to the circuit, components **D1**, **D2**, and **R4** create a 60 Hz square wave used to synchronize the micro controller to power line frequency via port **PB2**. In the figure, three identical load circuits are shown. For simplicity, only one will be described. **R8** and **OT1** provide an isolated command signal to trigger triac **TC1**, which allows current flow to a load **LP1.** A low signal from **PA4** signals the light to turn on. Inductor **L1** and capacitor **C1** provide surge limiting and EMI filtering and **R1** places a balancing load across **OT1. L1** reduces current surge and **C1** reduces electromagnetic emissions (EMI). The load **LP1** is shown here as a resistive lamp device, i.e., an electric light, but the load **LP1** can be any other electric device.

Components **R5, C4** and **D3** provide a power-on reset for the **Z8 CPU.** Crystal **XTAL1** sets the CPU to run at a precise frequency, shown here as 100MHz. This frequency is used by the phase control algorithm to vary the amount of time that electricity is allowed to flow to an appliance and thereby to and dim the associated appliance. Again, the **Z8E0010PEC** is a simple microprocessor used to control the lamps and interpret command signals.

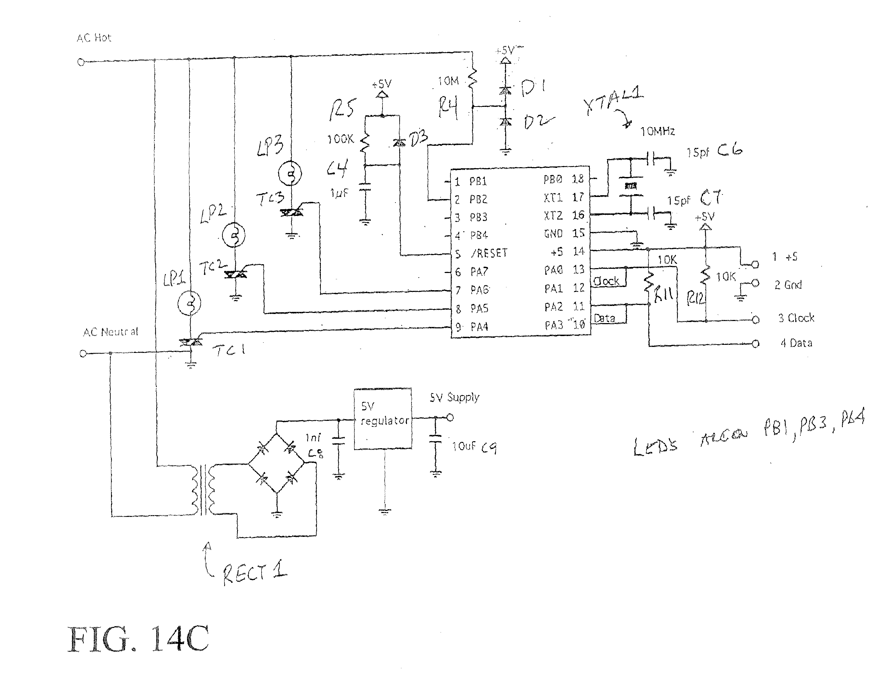

Referring now to Figure 14C, a circuit diagram of another preferred embodiment of an electrical switch apparatus **900** (Figure 9) of the present invention is shown, without an optical isolator. With reference to the circuit, components **D1, D2,** and **R4** create a 60 Hz square wave used to synchronize the micro controller to power line frequency via port **PB2.** In the figure, three identical load circuits are shown. For simplicity, only one will be described. A signal from **PA4** triggers triac **TC1** and allows the light or other device **LP1** to turn on.

Components **R5, C4** and **D3** provide a power-on reset for the **Z8 CPU.** Crystal **XTAL1** and associated capacitors **C6** and **C7** sets the CPU to run at a precise frequency, shown here as 100MHz. This frequency is used by the phase control algorithm to vary the amount of time that electricity is allowed to flow to an appliance and thereby to brighten and dim the associated appliance. Again, the **Z8E0010PEC** is a simple microprocessor used to control the lamps and interpret command signals. **Ports +5, PA0, PA1, PA2** and **PA3** and resistors **R11** and **R12** are associated with clock and data functions.

### Illustrative Examples of Software Diagrams for Selection and Control of Devices

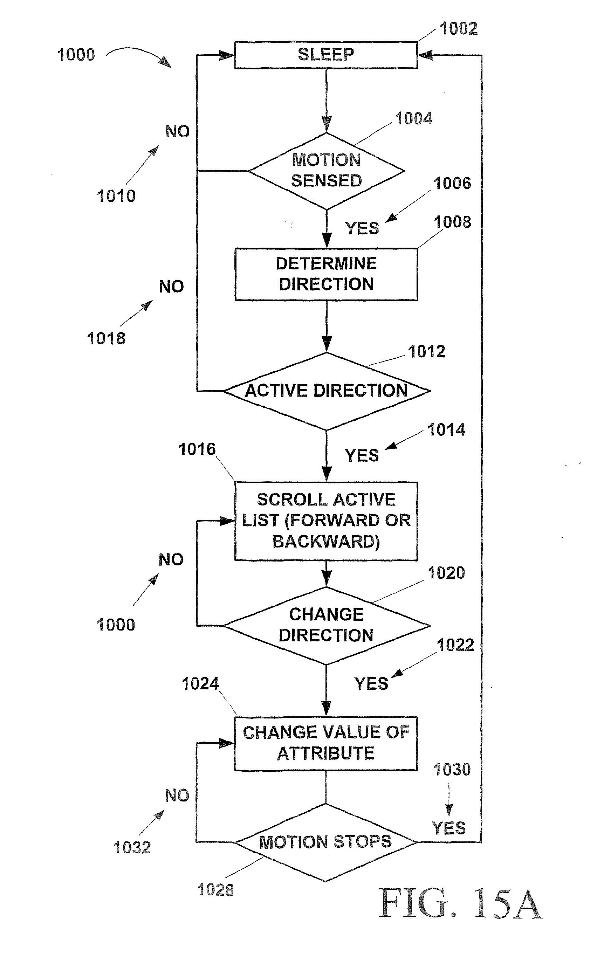

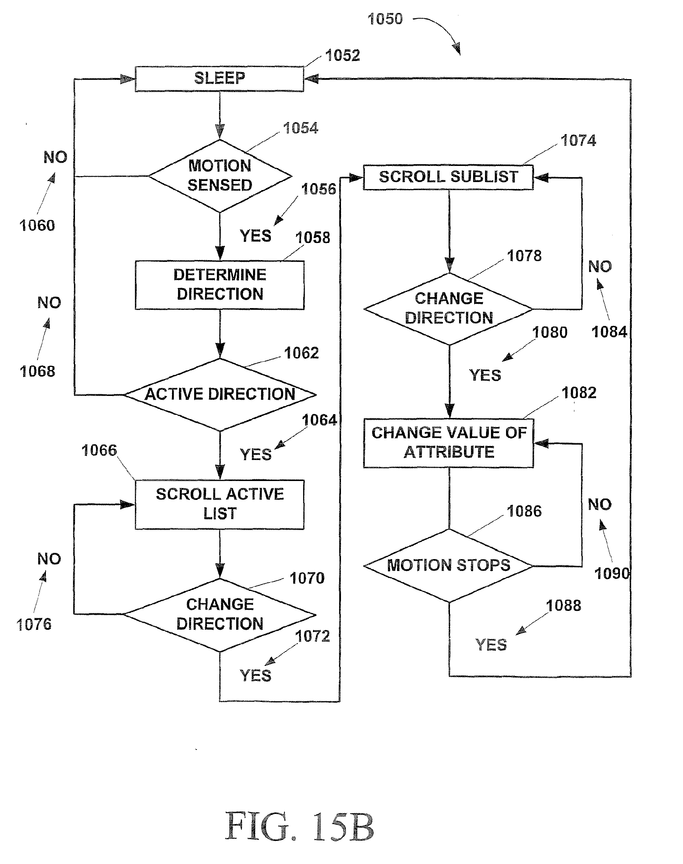

Referring now to Figures 15A&B, two conceptual software flow diagrams are depicted. Figure 15A depicts a two level activation protocol, device selection and attribute control; while Figure 15B depicts a three level activation protocol, switch and/or device selection (list), device and/or attribute selection (sublist) and attribute control. Looking at Figure 15A, a preferred two level flow diagram **1000** is shown to include a sleep step **1002,** adapted to await detection of motion on or in proximity to an interface of this invention. The sleep step **1002** can be implemented in any number of programming methodologies well known in the art. If motion is detected in a conditional step **1004,** then control is transferred along a YES branch **1006** to a determine active step **1008;** otherwise control is transferred along a NO branch **1010** to the sleep step **1002.** If the motion is in the active direction as established by step **1012,** then control is transferred along a YES branch **1014 to** a scroll active list step **1016;** otherwise control is transferred along a NO branch **1018** to the sleep step **1002.** Alternatively, the determine direction step **1008** and the conditional step **1012** can be removed, and any motion regardless of direction will result in the execution of the scroll step **1016.**

If the direction ofmotion changes as determined by conditional step **1020,** then control is transferred along a YES branch **1022** to a change attribute value step **1024,** which selects the desired device from the list where the change in direction was detected allowing the value of the attribute to change; otherwise control is transferred along a NO branch **1026** to the scroll step **1016.** The attribute is changed until no further motion is detected or a time out occurs as determined by conditional step **1028,** there after control is transferred along a YES branch **1030** to the sleep step **1002;** otherwise control is transferred along a NO branch **1032** to the change value step **1016.**

Looking at Figure 15B, a preferred two level flow diagram **1050** is shown to include a sleep step **1052,** adapted to await detection of motion on or in proximity to an interface of this invention. The sleep step **1052** can be implemented in any number of programming methodologies well known in the art. If motion is detected in a conditional step **1054,** then control is transferred along a YES branch **1056** to a determine active step **1058;** otherwise control is transferred along a NO branch **1060** to the sleep step **1052.** If the motion is in the active direction as established by conditional step **1062,** then control is transferred along a YES branch **1064** to a scroll active list step **1066;** otherwise control is transferred along a NO branch **1068** to the sleep step **1052.** Alternatively, the determine direction step **1058** and the conditional step **1062** can be removed, and any motion regardless of direction will result in the execution of the scroll step **1066.**

If the direction of motion changes as determined by conditional step **1070**, then control is transferred along a YES branch **1072** to a scroll sublist step **1074**, which selects the desired sublist from the list where the change in direction was detected allowing the sublist to be scrolled; otherwise control is transferred along a NO branch **1076** to the scroll step **1066.** If the direction of motion changes as determined by conditional step **1078,** then control is transferred along a YES branch **1080** to a change attribute value step **1082,** which selects the desired device from the list where the change in direction was detected allowing the value of the attribute to change; otherwise control is transferred along a NO branch **1084** to the sublist scroll step **1074.** The attribute is changed until no further motion is detected or a time out occurs as determined by conditional step **1086,** there after control is transferred along a YES branch **1088** to the sleep step **1052;** otherwise control is transferred along a NO branch **1090** to the change value step **1082.**

The description of the present of the invention have been for purposes of illustration but are not intended to be exhaustive or to limit the invention to the 20 form disclosed. Many modifications and variations will be apparent to those of ordinary skill in the art. As such, while the present invention has been disclosed in connection with the embodiment thereof, it should be understood that there may be other embodiments which would fall within the spirit and scope of the invention is defined by the following claims.

All references cited herein are incorporated herein by reference. While this invention has been described fully and completely, it should be understood that, within the scope of the appended claims, the invention may be practiced otherwise than as specifically described. Although the invention has been disclosed with reference to its preferred embodiments, from reading this description those of skill in the art may appreciate changes and modification that may be made which do not depart from the scope and spirit of the invention as described above and claimed hereafter.

## Claims

1. A multi-device control apparatus comprising:
a user interface including a sensor adapted to motion and produce an corresponding to the sensed motion;
a processing unit in conununication the interface adapted to convert the sensor output into a command output, and
at least one electrical device controlled by the processing unit, each of the devices having at least one adjustable attribute,
where the command output is selected from the group consisting of a device scroll output adapted to scroll through a device list, an attribute scroll output adapted to scroll through an attribute list associated with a selected device from the device list and an attribute change output associated with the selected device attribute and adapted to change a value of the device attribute, and
where a direction of the sensed motion determines the command output invoked.

2. The apparatus of claim 1, wherein the motion sensor is selected from the group of an optical sensors, touch sensitive surfaces, touchless surfaces, rotatable devices, or mixtures or combinations thereof.

3. The apparatus of claim 1, wherein the devices are selected from the group consisting of lighting devices, cameras, ovens, dishwashers, stoves, sound systems, display systems, alarm systems, control systems, medical devices, robots, robotic control systems, hot and cold water supply devices, air conditioning systems, heating systems, ventilation systems, air handling systems, computers and computer systems, chemical plant control systems, computer operating systems and other software systems, remote control systems, or mixtures or combinations thereof.

4. The apparatus of claim 1, wherein, for device having a single adjustable attribute, motion in a first direction causes the processing unit to issue the device scroll output and motion in a second direction causes the processing unit simultaneously to select an active device from the device list and to issue the attribute change output to change a value of the single adjustable attribute of the selected device, where each direction has a positive component and a negative component and where motion in the positive component of the first direction scrolls through the device list in a forward mode, while motion in the negative component of the first direction scrolls through the device list in a reverse mode, and where motion in the positive component of the second direction causes the value of the attribute to increase, while motion in the negative component of the second direction causes the value of the attribute to decrease, and the sensed motion continues until a desired value is attained and where the first direction and the second direction are different by an amount sufficient to allow direction discrimination.

5. The apparatus of claim 1, wherein, for device having a plurality of adjustable attributes, motion in a first direction causes the processing unit to issue the device scroll output, motion in a second direction causes the processing unit simultaneously to select an active device from the device list and to issue the attribute scroll output, and motion in a third direction causes the processing unit simultaneously to select all active attribute from the attribute list and to issue the attribute change output for the selected attribute of the selected device, where each direction has associated positive and negative components, where motion in the positive component ofthe third direction in its direction causes the value of the attribute to increase, while motion in a negative second direction causes the value of the attribute to decrease until a desired value is obtained, where the first direction and the second directions are different by an amount sufficient to allow direction discrimination and the second and third directions are different by the amount.

6. An electrical switch apparatus comprising:
a multi-device switch including
a user interface having a motion sensor, and
a processing unit, and
a plurality of electrical devices in electrical communication with and under the control of the switch, where each of the devices includes at least one adjustable attribute,
where motion on, near, and/or about the motion sensor produces output to the processing unit which converts the output signals into command outputs selected from the group of device scroll outputs, attribute scroll outputs and attribute change outputs and where a direction of the sensed motion controls the type of command output generated.

7. The apparatus of claim 6, wherein the motion sensor is selected from the group of an optical sensors, touch sensitive surfaces, touchless surfaces, rotatable devices, or mixtures or combinations thereof.

8. The apparatus of claim 6, wherein the devices are selected from the group consisting of lighting devices, cameras, ovens, dishwashers, stoves, sound systems, display systems, alarm systems, control systems, medical devices, robots, robotic control systems, hot and cold water supply devices, air conditioning systems, heating systems, ventilation systems, air handling systems, computers and computer systems, chemical plant control systems, computer operating systems and other software systems, remote control systems, or mixtures or combinations thereof.

9. The apparatus of claim 6, wherein, for device having a single adjustable attribute, motion in a first direction causes the processing unit to issue the device scroll output and motion in a second direction causes the processing unit simultaneously to select an active device from the device list and to issue the attribute change output to change a value of the single adjustable attribute of the selected device, where each direction has a positive component and a negative component and where motion in the positive component ofthe first direction scrolls through the device list in a forward mode, while motion in the negative component of the first direction scrolls through the device list in a reverse mode, and where motion in the positive component of the second direction causes the value of the attribute to increase, while motion in the negative component of the second direction causes the value of the attribute to decrease, and the sensed motion continues until a desired value is attained and where the first direction and the second direction are different by an amount sufficient to allow direction discrimination.

10. The of claim 6, for device having a plurality of adjustable attributes, in a first direction causes the processing to issue the device scroll output, in a second direction the processing unit to select an active device from the device list to issue the attribute scroll output, and motion in a third direction causes the processing simultaneously to select an active attribute from the list and to issue the attribute change output for the selected attribute of the selected device, where each direction has associated positive and negative components, where motion in the positive component ofthe third direction in its direction causes the value ofthe attribute to increase, while motion in a negative second direction causes the value of the attribute to decrease until a desired value is obtained, where the first direction and the second directions are different by an amount sufficient to allow direction discrimination and the second and third directions are different by the amount.

11. An electrical device control apparatus comprising:
a plurality of multi-device switches, each of the switches including
a user interface having a motion sensor,
a processing unit, and
each of the switches in electrical communication with and controlling a plurality of electrical devices, where each of the devices includes at least one adjustable attribute,
where motion on, near, and/or about the motion sensor produces output signals to the processing unit which converts the output signals into command outputs selected from the group of device scroll outputs, attribute scroll outputs and attribute change outputs and where a direction of the sensed motion controls the type of command output generated.

12. The of claim 11, further comprising
a remote control unit in communication with each of the and designed to provide remote control of the switches the devices.

13. The apparatus of claim 11, further comprising
a control unit in communication with each of the switches and designed to provide centralized control of the switches and the devices.

14. The apparatus of claim 13, further comprising
a remote control unit in communication with the control unit to provide remote control of the control unit, all of the switches and all of the devices.

15. The apparatus of claim 11, wherein the motion sensor is selected the group of an optical sensors, touch sensitive surfaces, touchless surfaces, rotatable devices, or mixtures or combinations thereof.

16. The apparatus of claim 11, wherein the devices are selected from the group consisting of lighting devices, cameras, ovens, dishwashers, stoves, sound systems, display systems, alarm systems, control systems, medical devices, robots, robotic control systems, hot and cold water supply devices, air conditioning systems, heating systems, ventilation systems, air handling systems, computers and computer systems, chemical plant control systems, computer operating systems and other software systems, remote control systems, or mixtures or combinations thereof.

17. The apparatus of claim 11, wherein, for device having a single adjustable attribute, motion in a first direction causes the processing unit to issue the device scroll output and motion in a second direction causes the processing unit simultaneously to select an active device from the device list and to issue the attribute change output to change a value of the single adjustable attribute of the selected device, where each direction has a positive component and a negative component and where motion in the positive component of the first direction scrolls through the device list in a forward mode, while motion in the negative component of the first direction scrolls through the device list in a reverse mode, and where motion in the positive component of the second direction causes the value of the attribute to increase, while motion in the negative component of the second direction causes the value of the attribute to decrease, and the sensed continues until a desired value is attained and where the first direction and the second direction are different by an amount sufficient to allow direction disciiminelion.

18. The apparatus of claim 11, wherein, for device having a plurality of adjustable attributes, motion in a first direction causes the processing unit to issue the device scroll output, motion in a second direction causes the processing unit simultaneously to select an active device from the device list and to issue the attribute scroll output, and motion in a third direction causes the processing unit simultaneously to select an active attribute from the attribute list and to issue the attribute change output for the selected attribute of the selected device, where each direction has associated positive and negative components, where motion in the positive component of the third direction in its direction causes the value of the attribute to increase, while motion in a negative second direction causes the value of the attribute to decrease until a desired value is obtained, where the first direction and the second directions are different by an amount sufficient to allow direction discrimination and the second and third directions are different by the amount.

19. An user interface apparatus comprising
a housing,
a motion sensor, and
a processing unit,
where motion on, near, and/or about the motion sensor produces output signals to the processing unit which converts the output signals into command outputs and where the command outputs are used to control an electrical device.

20. The apparatus of claim 19, where in the electrical device is selected from the group consisting of sound systems, display systems, alarm systems, control systems, medical devices, robots, robotic control systems, hot and cold water supply devices, air conditioning systems, heating systems, ventilation systems, air handling systems, computers and computer systems, chemical plant control systems, computer operating systems and other software systems, or mixtures or combinations thereof.
